# EUROPEAN PATENT APPLICATION

(11) **EP 4 716 288 A1**
(43) Date of publication of application: **25.03.2026**
(21) Application number: 23937557.9
(22) Date of filing: 18.05.2023
(51) Int. Cl.: H04W 24/10, H04W 52/00

(54) **TERMINAL AND COMMUNICATION METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP); JIANG, Yu, Beijing, 100190 (CN); LI, Anxin, Beijing, 100190 (CN)
(74) Representative: Hoffmann Eitle
(86) International application number: PCT/JP2023/018668
(87) International publication number: WO 2024/236821

(57) **Abstract**

A terminal includes: a reception unit configured to receive, from a base station, a configuration related to a CSI (Channel state information) report; a control unit configured to perform measurement of a CSI-RS (Reference signal) transmitted from the base station, based on a report configuration included in the configuration; and a transmission unit configured to transmit a CSI report to the base station, based on a result of the measurement. The control unit activates an SP (Semi-persistent) - CSI corresponding to a sub-configuration or triggers an A (Aperiodic) - CSI, based on an identifier used for identifying the sub-configuration included in the report configuration.

## Description

### TECHNICAL FIELD

The present invention relates to a terminal and a communication method in a wireless communication system.

### BACKGROUND ART

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, energy saving, etc. (for example, Non-Patent Literature 1).

In addition, in the 3GPP (registered trademark) Release 18, in order to achieve the environmental sustainability, the carbon neutrality, the SDGs (Sustainable Development Goals), the operation cost reduction, and the like, the importance of the network energy savings is increased and energy saving methods are being discussed (For example, Non-Patent Literature 2).

### CITATION LIST

### Non-Patent Literature

Non-Patent Literature 1: 3GPP TS 38.300 V17.3.0 (2022-12)
Non-Patent Literature 2: "New WID: Network energy savings for NR", RP-223540, 3GPP TSG RAN Meeting #98-e, December, 2022
Non-Patent Literature 3: 3GPP TS 38.331 V17.3.0 (2022-12)
Non-Patent Literature 4: 3GPP TS 38.321 V17.3.0 (2022-12)

### SUMMARY OF INVENTION

### TECHNICAL PROBLEM

In order to achieve carbon neutrality and SDGs, it is increasingly important to reduce energy consumption of base stations. Enhancement in the spatial domain and the energy domain is being discussed as a method of reducing energy consumption in the network. For example, in order to efficiently adapt: spatial elements such as antenna ports or active transmitter chains; and a power offset between PDSCH (Physical Downlink Shared Channel) and CSI-RS (Channel state information Reference Signal), procedures related to CSI (Channel state information) related to measurement and report are required to be enhanced.

The present invention has been made in view of the above points and is intended to enhance procedures related to CSI (Channel state information) related to measurement and report in a wireless communication system.

### SOLUTION TO PROBLEM

According to the disclosed technique, a terminal is provided. The terminal includes: a reception unit configured to receive, from a base station, a configuration related to a CSI (Channel state information) report; a control unit configured to perform measurement of a CSI-RS (Reference signal) transmitted from the base station, based on a report configuration included in the configuration; and a transmission unit configured to transmit a CSI report to the base station, based on a result of the measurement. The control unit activates an SP (Semi-persistent) - CSI corresponding to a sub-configuration or triggers an A (Aperiodic) - CSI, based on an identifier used for identifying the sub-configuration included in the report configuration.

### ADVANTAGEOUS EFFECTS OF INVENTION

According to the disclosed technique, procedures related to CSI (Channel state information) related to measurement and report can be enhanced in a wireless communication system.

### BRIEF DESCRIPTION OF DRAWINGS

[Fig. 1] is a drawing illustrating an example of a configuration of a wireless communication system.
[Fig. 2] is a drawing illustrating an example of a configuration related to an SP-CSI report on PUCCH.
[Fig. 3] is a drawing illustrating an example of a configuration related to an SP-CSI report on PUSCH.
[Fig. 4] is a drawing illustrating an example of a configuration related to an aperiodic CSI report.
[Fig. 5] is a drawing illustrating an example (1) of a change of RRC specification related to an embodiment of the present invention.
[Fig. 6] is a drawing illustrating an example (2) of a change of RRC specification related to an embodiment of the present invention.
[Fig. 7] is a drawing illustrating an example (3) of a change of RRC specification related to an embodiment of the present invention.
[Fig. 8] is a drawing illustrating an example (4) of a change of RRC specification related to an embodiment of the present invention.
[Fig. 9] is a drawing illustrating an example (1) of MAC-CE related to an embodiment of the present invention.
[Fig. 10] is a drawing illustrating an example (2) of MAC-CE related to an embodiment of the present invention.
[Fig. 11] is a drawing illustrating an example (3) of MAC-CE related to an embodiment of the present invention.
[Fig. 12] is a drawing illustrating an example (4) of MAC-CE related to an embodiment of the present invention.
[Fig. 13] is a drawing illustrating an example (5) of MAC-CE related to an embodiment of the present invention.
[Fig. 14] is a drawing illustrating an example (6) of MAC-CE related to an embodiment of the present invention.
[Fig. 15] is a drawing illustrating an example (7) of MAC-CE related to an embodiment of the present invention.
[Fig. 16] is a drawing illustrating an example of activation or deactivation of a sub-configuration related to an embodiment of the present invention.
[Fig. 17] is a drawing illustrating an example (1) of a trigger of a sub-configuration related to an embodiment of the present invention.
[Fig. 18] is a drawing illustrating an example (5) of a change of RRC specification related to an embodiment of the present invention.
[Fig. 19] is a drawing illustrating an example (6) of a change of RRC specification in an embodiment of the present invention.
[Fig. 20] is a drawing illustrating an example (7) of a change of RRC specification related to an embodiment of the present invention.
[Fig. 21] is a drawing illustrating an example (2) of a trigger of a sub-configuration related to an embodiment of the present invention.
[Fig. 22] is a drawing illustrating an example (8) of a change of RRC specification related to an embodiment of the present invention.
[Fig. 23] is a drawing illustrating an example (9) of a change of RRC specification related to an embodiment of the present invention.
[Fig. 24] is a drawing illustrating an example (3) of a trigger of a sub-configuration related to an embodiment of the present invention.
[Fig. 25] is a drawing illustrating an example (10) of a change of RRC specification related to an embodiment of the present invention.
[Fig. 26] is a drawing illustrating an example (11) of a change of RRC specification related to an embodiment of the present invention.
[Fig. 27] is a drawing illustrating an example (4) of a trigger of a sub-configuration related to an embodiment of the present invention.
[Fig. 28] is a drawing illustrating an example (5) of a trigger of a sub-configuration related to an embodiment of the present invention.
[Fig. 29] is a drawing illustrating an example of a functional structure of a base station 10 related to an embodiment of the present invention.
[Fig. 30] is a drawing illustrating an example of a functional structure of a terminal 20 related to an embodiment of the present invention.
[Fig. 31] is a drawing illustrating an example of a hardware structure of the base station 10 or the terminal 20 related to an embodiment of the present invention.
[Fig. 32] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. In addition, the above-described terms in NR correspond to NR-SS, NR-PSS, NR-SSS, NR-PBCH, NR-PRACH, etc. However, even when a signal is used for NR, the signal is not required to be referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter or the like is "configured" may mean that a predetermined value is pre-configured, or may mean that a radio parameter indicated by a base station 10 or a terminal 20 is configured.

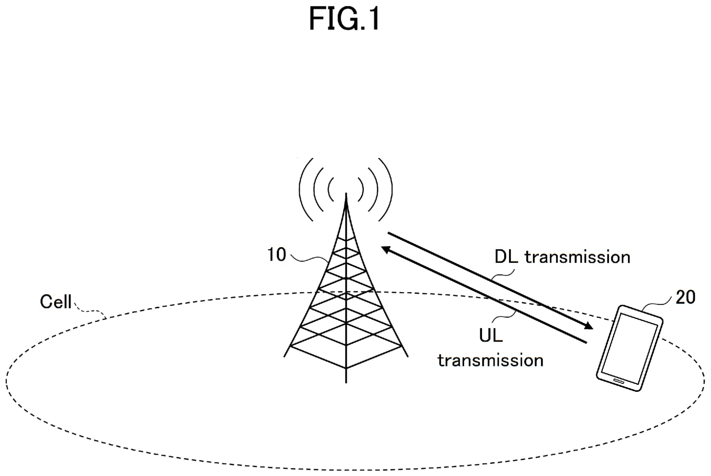

Fig. 1 is a drawing illustrating a configuration example (1) of a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. The base station 10 transmits a synchronization signal and system information to the terminal 20. The synchronization signal is, for example, an NR-PSS and/or an NR-SSS. The system information may be transmitted via an NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in Fig. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals.

The terminal 20 is capable of performing carrier aggregation in which a plurality of cells (a plurality of CCs (Component Carriers)) are bundled for performing communication with the base station 10. In the carrier aggregation, one PCell (Primary cell) and one or more SCells (Secondary cells) are used. In addition, PUCCH-SCell having PUCCH may be used.

In order to achieve carbon neutrality and SDGs, it is increasingly important to reduce energy consumption of base stations. Enhancement in the spatial domain and the energy domain is being discussed as a method of reducing energy consumption in the network. For example, in order to efficiently adapt: spatial elements such as antenna ports or active transmitter chains; and a power offset between PDSCH (Physical Downlink Shared Channel) and CSI-RS (Channel state information Reference Signal), procedures related to CSI (Channel state information) related to measurement and report are required to be enhanced.

Here, in order to support a CSI report configuration accompanied by L sub-configurations, the terminal 20 may support an operation of reporting, in one report instance, CSIs that are associated with N sub-configurations from among the L sub-configurations. N is equal to or greater than 1 and equal to or less than L, and each CSI corresponds to one sub-configuration. The report may applied to an SP-CSI (Semi-persistent CSI), or may be applied to an aperiodic CSI. In addition, the maximum value of N and the maximum value of L may be determined based on the UE capability.

Hereinafter, "CSI report configuration" may be used interchangeably with "report configuration" and "CSI-ReportConfig". In addition, the terminal 20 may receive a configuration related to CSI measurement and report from the base station 10, perform measurement of CSI-RS transmitted from the base station 10, based on the configuration, and transmit a CSI report to the base station 10 based on a result of the measurement.

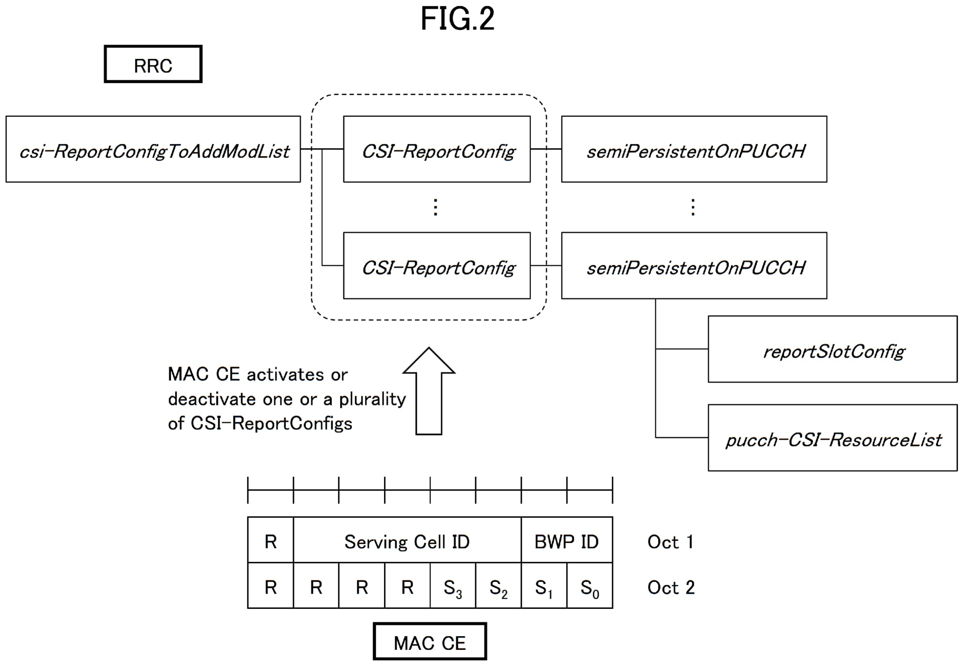

Fig. 2 is a drawing illustrating an example of a configuration related to an SP-CSI report on PUCCH. As illustrated in Fig. 2, RRC configures a plurality of semiPeristentOnPUCCHs in a report configuration (CSI-ReportConfig), and MAC-CE (Medium Access Control - Control Element) either: enables or disables; or activates or deactivates, one or more report configurations (refer to Non-Patent Literature 3 and Non-Patent Literature 4).

The field S₀ of MAC-CE corresponds to a report configuration including PUCCH resources for reporting an SP-CSI in the indicated BWP, and the report configuration includes a smallest CSI-ReportConfigId among the list in which the type is configured to be semiPersistentOnPUCCH.

With respect to the field Sᵢ of MAC-CE, when a value 1 is configured, the corresponding SP-CSI report configuration is enabled or activated. With respect to the field Sᵢ of MAC-CE, when a value 0 is configured, the corresponding SP-CSI report configuration is disabled or deactivated.

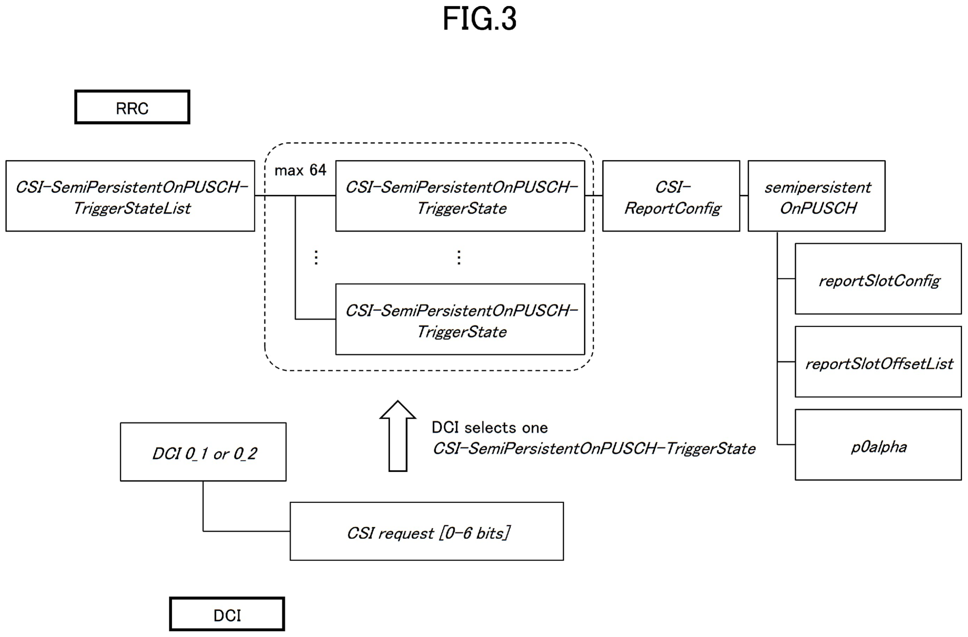

Fig. 3 is a drawing illustrating an example of a configuration related to an SP-CSI report on PUSCH. As illustrated in Fig. 3, RRC configures up to 64 CSI-SemiPersistentOnPUSCH-TriggerStates, and DCI triggers one CSI-SemiPersistentOnPUSCH-TriggerState. The one CSI-SemiPersistentOnPUSCH-TriggerState corresponds to one CSI report configuration.

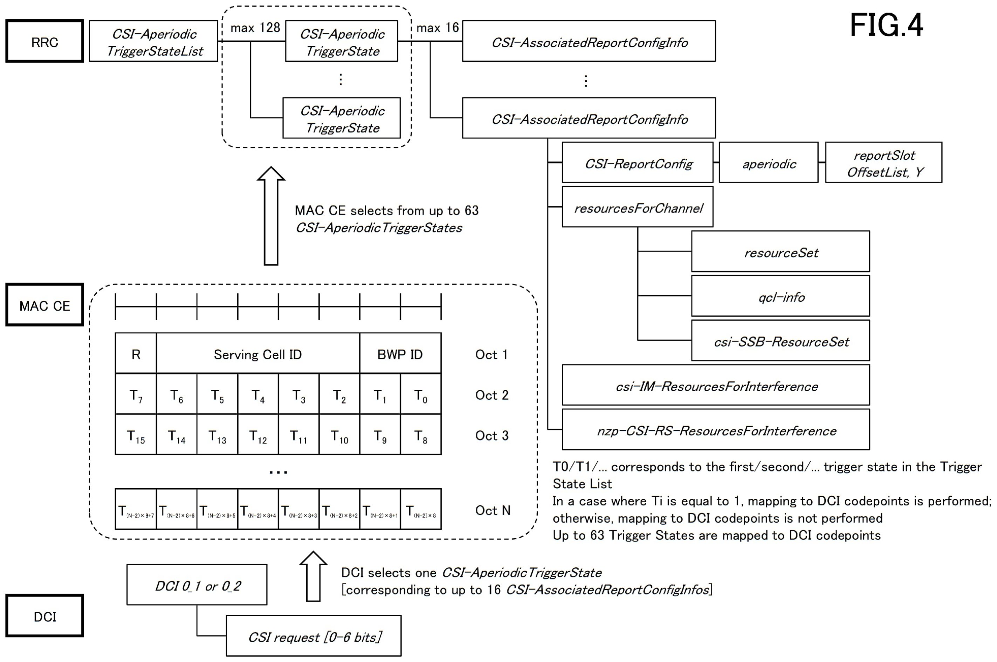

Fig. 4 is a drawing illustrating an example of a configuration related to an aperiodic CSI report. As illustrated in Fig. 4, RRC configures up to 128 CSI-AperiodicTriggerStates, MAC-CE performs downsizing selection in order to cause the range to be up to 63 CSI-AperiodicTriggerStates, and DCI triggers one CSI-AperiodicTriggerState. One CSI-AperiodicTriggerState corresponds to up to 16 CSI-AssociatedReportConfigInfos, that is, corresponds to up to 16 CSIs. One CSI-AssociatedReportConfigInfo corresponds to one CSI report configuration.

The field T0/T1/... of MAC-CE corresponds to the first/second/... CSI-AperiodicTriggerState of CSI-AperiodicTriggerStateList. In a case where Ti is equal to 1, mapping to the DCI codepoints is performed, and otherwise, the mapping to the DCI codepoints is not performed. Up to 63 CSI-AperiodicTriggerStates are mapped to the DCI codepoints.

The SP-CSI report and aperiodic CSI report are required to support a framework in which N CSIs that are associated with N sub-configurations among L sub-configurations are reported in one CSI report configuration.

However, the above-described operation is not supported in the framework of the legacy CSI report. The framework of the legacy CSI report only supports triggering of CSIs that are associated with one or a plurality of CSI report configurations, and does not support triggering of CSIs that are associated with sub-configurations in a CSI report configuration.

Accordingly, in order to achieve the network energy savings, the following Operation 1) to Operation 4) may be performed.
Operation 1) Definition of sub-configuration ID for sub-configuration in CSI report configuration
Operation 2) SP-CSI report on PUCCH
Operation 3) SP-CSI report on PUSCH
Operation 4) Aperiodic CSI report on PUSCH

Hereinafter, "Operation 1) Definition of sub-configuration ID for sub-configuration in CSI report configuration" will be described.

Operation 1-1) A new IE (Information element) may be defined.

Operation 1-1-1) The new IE may be a local ID used for identifying a CSI report sub-configuration in a CSI report configuration. Each of the CSI report sub-configurations in a CSI report configuration may be assigned with one ID based on the new IE. The values of the IDs for sub-configurations in different CSI report configurations may be the same or may be different. The maximum number of sub-configurations per CSI report configuration may be defined by an IE or a fixed value.

For example, the maximum number of sub-configurations per CSI report configuration may be 2, or may be 3, 4, or other values. For example, the maximum number of sub-configurations per CSI report configuration may be the same or may be different between: SP-CSI reported by PUCCH; SP-CSI reported by PUSCH; A-CSI (Aperiodic CSI); and P-CSI (Periodic CSI).

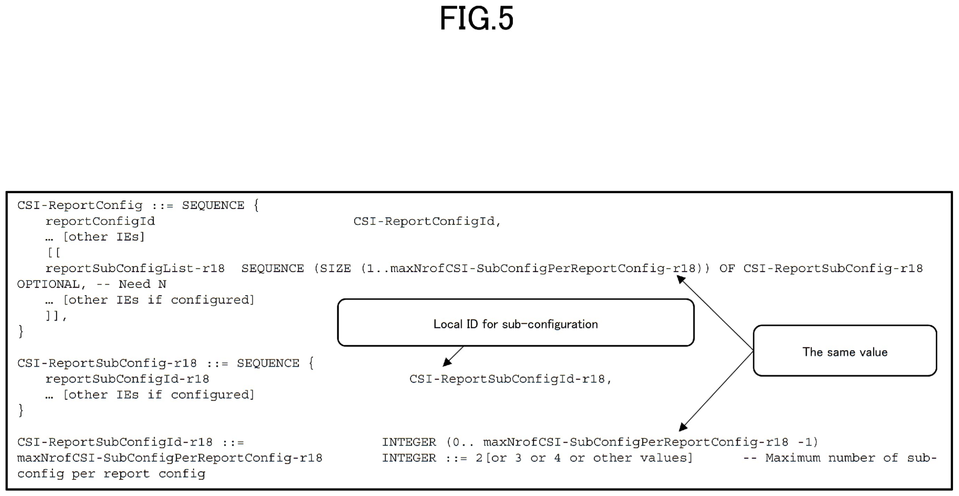

Fig. 5 is a drawing illustrating an example (1) of a change of RRC specification related to an embodiment of the present invention. As illustrated in Fig. 5, the local ID for sub-configuration may be defined by an IE "CSI-ReportSubConfigId-r18", for example. The maximum number of sub-configurations per CSI report configuration may be defined by an IE "maxNrofCSI-SubConfigPerReportConfig-r18", for example, and the maximum number of IDs included in a list of the local IDs, reportSubConfigList-r18, may be the same as the maximum value of ID.

Operation 1-1-2) The new IE may be a global ID used for identifying a CSI report sub-configuration in all of the sub-configurations in all of the CSI report configurations. The global ID is used only for identifying a sub-configuration. Each of the CSI report sub-configurations in all of the CSI report configurations may be assigned with one ID based on the new IE. The values of the IDs for sub-configurations in different CSI report configurations may be different. The maximum number of sub-configurations in all of the CSI report configurations may be defined by an IE or a fixed value.

For example, the maximum number of sub-configurations in all of the CSI report configurations may be 16, or may be 32, 48, 64, or other values.

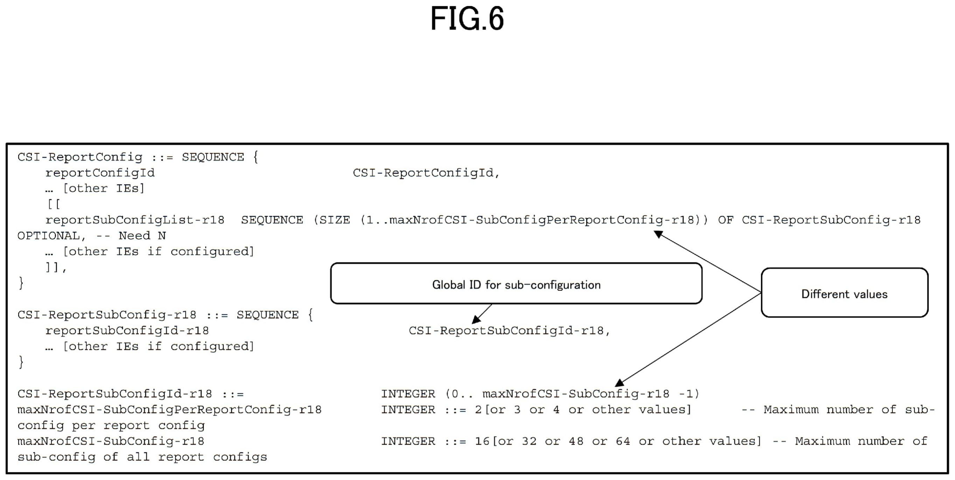

Fig. 6 is a drawing illustrating an example (2) of a change of RRC specification related to an embodiment of the present invention. As illustrated in Fig. 6, the local ID for sub-configuration may be defined by an IE "CSI-ReportSubConfigId-r18", for example. The maximum number of sub-configurations may be defined by an IE "maxNrofCSI-SubConfigPerReportConfig-r18", for example, and the maximum value of the IDs may be defined by an IE "maxNrofCSI-SubConfig", for example. The maximum number of sub-configurations and the maximum value of the ID may be different values.

Operation 1-1-3) The new IE may be a global ID used for identifying a CSI report sub-configuration or a CSI report configuration. In other words, the global ID is used for identifying both the sub-configuration and the report configuration. Each of the CSI report sub-configurations in all of the CSI report configurations may be assigned with one ID based on the new IE. Each of the CSI report configurations that includes no CSI sub-configuration may be assigned with one ID based on the new IE. Each of the CSI report configurations that includes one or more CSI sub-configurations may be or may not be assigned with one ID based on the new IE.

The global ID for sub-configuration or the global ID for CSI report configuration may be different. The maximum value of the global ID may be defined by an IE or a fixed value. For example, the maximum value of the global ID may be 48, or may be 56, 64, 80, or other values.

In a case where a CSI report configuration is assigned with an ID based on the new IE, or in a case where one or a plurality of sub-configurations in one CSI report configuration are each assigned with an ID based on one or a plurality of new IEs, the legacy ID (that is, CSI-ReportConfigId) may be ignored or may be used.

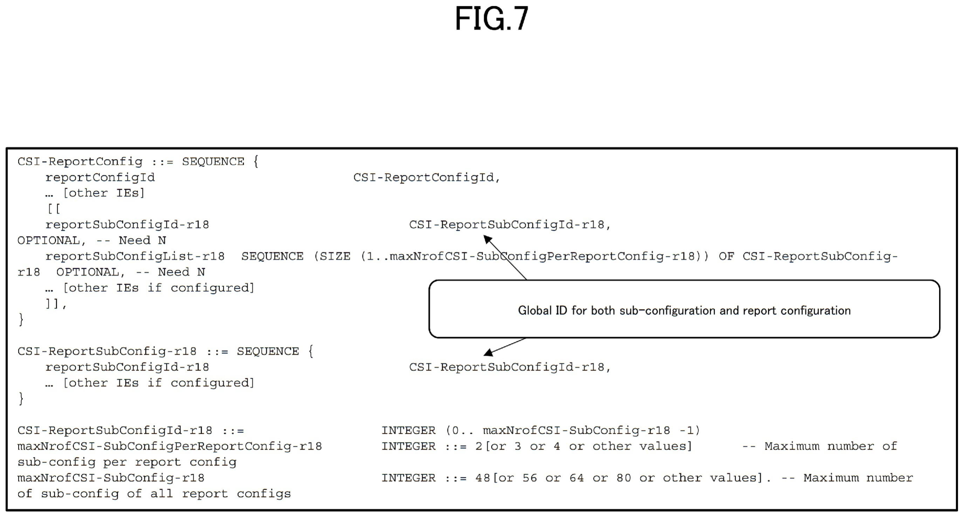

Fig. 7 is a drawing illustrating an example (3) of a change of RRC specification related to an embodiment of the present invention. As illustrated in Fig. 7, the local ID for both report configuration and sub-configuration may be defined by an IE "CSI-ReportSubConfigId-r18", for example.

Operation 1-2) Legacy IE may be reused. Each CSI report sub-configuration may be assigned with one global ID based on the legacy IE (that is, CSI-ReportConfigId). The maximum number of report configurations may be 48 without change, or may be enhanced to be a larger value, for example, 56, 64, 80, or other values.

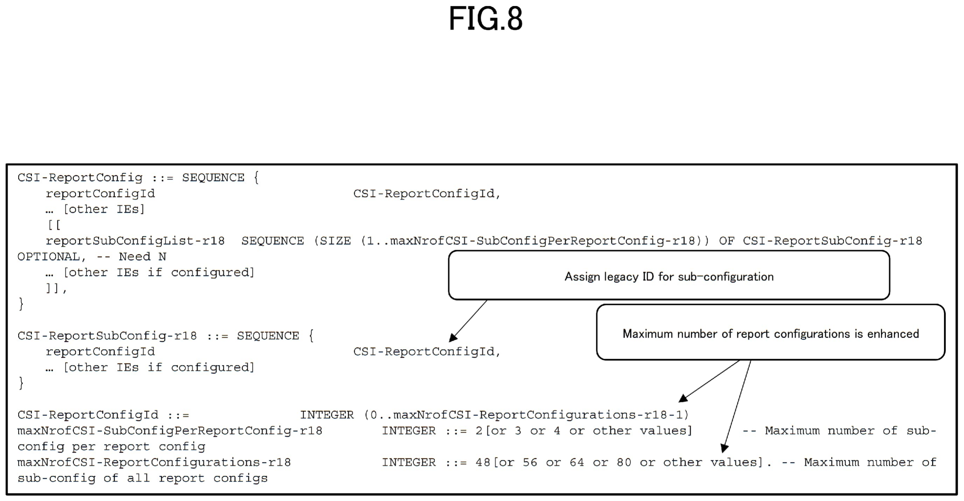

Fig. 8 is a drawing illustrating an example (4) of a change of RRC specification related to an embodiment of the present invention. As illustrated in Fig. 8, the legacy ID "CSI-ReportConfigId" may be assigned for sub-configuration. The maximum number of report configurations may be enhanced.

Hereinafter, "Operation 2) SP-CSI report on PUCCH" will be described.

The legacy MAC-CE indicates activation or deactivation of each SP-CSI report by using a one-bit field. In order to achieve the network energy savings, the indication via MAC-CE is required to be enhanced to activate or deactivate sub-configurations of each SP-CSI report.

According to the base station configuration and/or UE capability, the maximum value described in the following 1) to 6) or the maximum value of a total of some of the following 1) to 6) may be limited to a value based on a fixed value or a configured value.
1) The number of configured and/or activated report configurations of SP-CSI on PUCCH
2) The number of configured and/or activated report configurations in which sub-configurations of SP-CSI on PUCCH are configured
3) The number of configured and/or activated report configurations in which sub-configurations of SP-CSI on PUCCH are not configured
4) The number of configured and/or activated report configurations in which a number of sub-configurations of SP-CSI on PUCCH are configured, the number of sub-configurations being greater than a predetermined number (for example, 0 or 1).
5) The number of configured and/or activated report configurations in which sub-configurations of SP-CSI on PUCCH are not configured or a number of sub-configurations of SP-CSI on PUCCH are configured, the number of sub-configurations being equal to or less than a predetermined value (for example, 1 or 2).
6) The number of configured and/or activated sub-configurations of SP-CSI on PUCCH

Operation 2-0) As an indication rule of activation or deactivation of SP-CSI report configuration, sub-configurations included in one report configuration may be simultaneously activated or deactivated. The activation or deactivation indication via legacy MAC-CE for SP-CSI on PUCCH may be reused. In a case where one report configuration is activated or deactivated and the report configuration does not include a sub-configuration, the CSI report may be activated or deactivated. Alternatively, in a case where one or a plurality of sub-configurations are included in the report configuration, all of the sub-configurations may be activated or deactivated.

Operation 2-1) As an indication rule of activation or deactivation of SP-CSI report configuration, additional fields included in MAC-CE may be used for indicating whether or not each of the sub-configurations is activated or deactivated. Hereinafter, the additional field and the additional bit field may be used interchangeably.

As described below, MAC-CE may indicate which one of the sub-configurations in one report configuration is to be activated or deactivated.
(a-1) Field of bitmap. One bit corresponds to one sub-configuration in the report configuration.
(a-2) Joint coded field.

Presence or absence of additional fields for each report configuration in MAC-CE may be determined as described below.
(b-1) Always present
(b-2) Present only in a case where the corresponding report configuration is present.
(b-3) Present only in a case where sub-configurations are configured and the number of sub-configurations is greater than a predetermined value (for example, 0 or 1).
(b-4) Present only in a case where both the above-described b-2 and the above-described b-3 are satisfied.

The bit length of the additional field for each report configuration may be configured as described below.
(c-1) Fixed bit length. For example, the fixed bit length may be determined based on the maximum number of sub-configurations per CSI report configuration.
(c-2) The bit length may be determined based on the actual number of sub-configurations of the corresponding CSI report configuration.

Operation 2-2) A case without sub-configuration and a case with sub-configuration may be jointly coded for activation or deactivation of report configuration. One field may correspond to each SP-CSI report configuration. The bit length of the additional field for each report configuration and sub-configuration may be configured as described below.
(d-1) Fixed bit length. For example, the fixed bit length may be determined based on the maximum number of sub-configurations per CSI report configuration.
(d-2) The bit length may be determined based on the actual number of sub-configurations of the corresponding CSI report configuration.

Operation 2-3) Activation or deactivation may be performed based on a global ID in the above-described Operation 1-1-2) or Operation 1-2), the global ID being assigned for SP-CSI report configuration without sub-configurations and for sub-configurations.

(e-1) One 1-bit field may be configured for each SP-CSI report configuration without sub-configurations or for each sub-configuration.

In addition, in order to activate or deactivate sub-configurations of SP-CSI report configuration on PUCCH, a new value may be defined for LCID (refer to Non-Patent Literature 4).

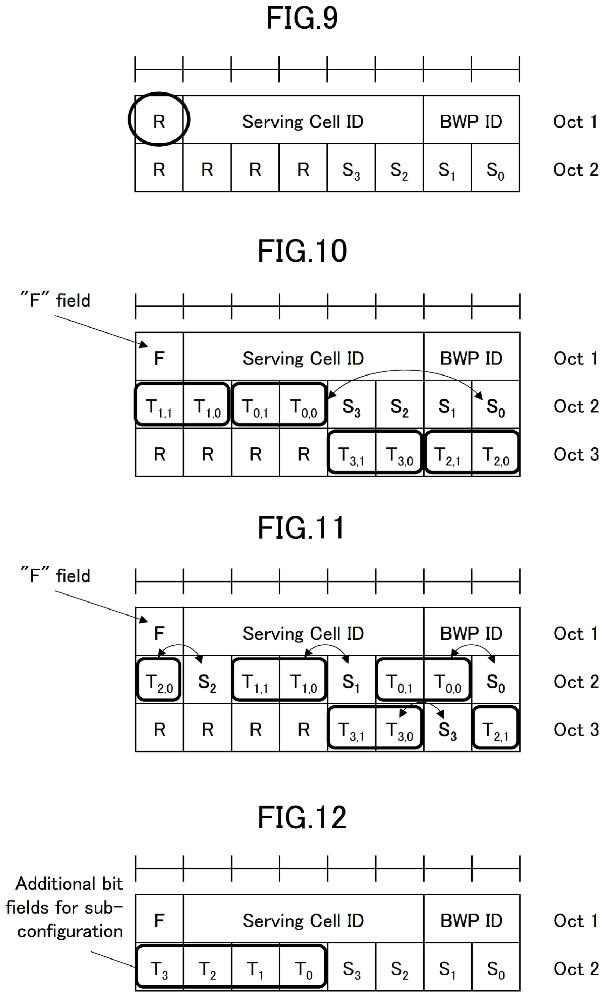

In addition, in order to indicate the bit length of MAC-CE, a new bit field may be defined, or a legacy reserved bit in MAC-CE may be reused. Fig. 9 is a drawing illustrating an example (1) of MAC-CE related to an embodiment of the present invention. The above-described MAC-CE is an example of MAC-CE for activating or deactivating SP-CSI report on PUCCH. For example, the above-described legacy reserved bit may be the most significant reserved bit of Oct1 as illustrated in Fig. 9.

With respect to the activated sub-configuration in one report configuration, the base station 10 may indicate, to the terminal 20, whether the CSI corresponding to the activated sub-configuration is a separated CSI or a joint CSI. With respect to the joint CSI, the overhead may be or may not be reduced. As an example of the overhead reduction, the differential or joint coded CSI values may be the same amount across a plurality of CSIs.

A bit field used for the above-described indication may be defined in MAC-CE. For example, with respect to a one-bit field, the value 0 may indicate a separated CSI and the value 1 may indicate a joint CSI with overhead reduction. For example, with respect to a two-bit field, the value 0 may indicate a separated CSI, the value 1 may indicate a joint CSI with common CSI, the value 2 may indicate a joint CSI with differential CSI, and the value 3 may indicate a joint CSI with joint coded CSI.

A new IE used for the above-described indication may be defined in RRC signaling, or an existing IE may be reused. For example, a new IE may be defined for report configuration. The new IE may be CSI-ReportConfig or report sub-configuration, or may be CSI-ReportSubConfig (refer to the above-described Operation 1)). In addition, a new report quantity type may be defined for reportQuantity.

Fig. 10 is a drawing illustrating an example (2) of MAC-CE related to an embodiment of the present invention. Fig. 11 is a drawing illustrating an example (3) of MAC-CE related to an embodiment of the present invention. Fig. 10 and Fig. 11 illustrate examples satisfying the following in the above-described Operation 2-1).
(a-1) Field of bitmap
(b-1) Always present
(c-1) Fixed bit length (2 bits, that is, the maximum number of sub-configurations per report configuration is 2)

As illustrated in Fig. 10, S₀ to S₃ may be arranged with legacy arrangement, and additional bit fields may be arranged at the end.

As illustrated in Fig. 11, additional bit fields may be arranged adjacent to S₀ to S₃.

S₀ corresponds to the report configuration that includes PUCCH resources for SP CSI reporting in the indicated BWP and has the lowest CSI-ReportConfigId or the lowest ID defined in Operation 1) in the list in which the type is configured to be semiPersistentOnPUCCH. The same thing applies to S₁ and the subsequent fields.

T_{0,0} and T_{0,1} correspond to an indication for two configurable sub-configurations in the report configuration corresponding to S₀. The same thing applies to S₁ and the subsequent fields.

T_{0,0} and T_{0,1} are described in the order of sub-configuration ID defined in Operation 1) in the corresponding report configuration. For example, T_{0,0} corresponds to the smallest sub-configuration ID in the report configuration corresponding to S₀.

The bit field F in Fig. 10 and the bit field F in Fig. 11 may be defined as described below.
(Alt. 1) The field is a field for indicating the bit length of the MAC-CE field. For example, the value 0/1 may indicate the bit length 16 bits/24 bits of the MAC-CE field.
Alt. 2) The field may indicate whether CSI corresponding to the activated sub-configuration in the report configuration is to be reported by using the separated CSI or by using the joint CSI (with/without overhead reduction).

In a case where Sᵢ is configured to be 0 and there is no sub-configuration in the corresponding report configuration, the report configuration may be deactivated. In a case where Sᵢ is configured to be 0 and there are sub-configurations in the corresponding report configuration, all of the sub-configurations may be deactivated.

In a case where Sᵢ is configured to be 1 and there is no sub-configuration in the corresponding report configuration, the report configuration may be activated. In a case where Sᵢ is configured to be 1, there are sub-configurations in the corresponding report configuration, T_{i,j} is configured to be 1, and the corresponding sub-configuration is present, the sub-configuration may be activated. In a case where Sᵢ is configured to be 1, there are sub-configurations in the corresponding report configuration, T_{i,j} is configured to be 0, and the corresponding sub-configuration is present, the sub-configuration may be deactivated.

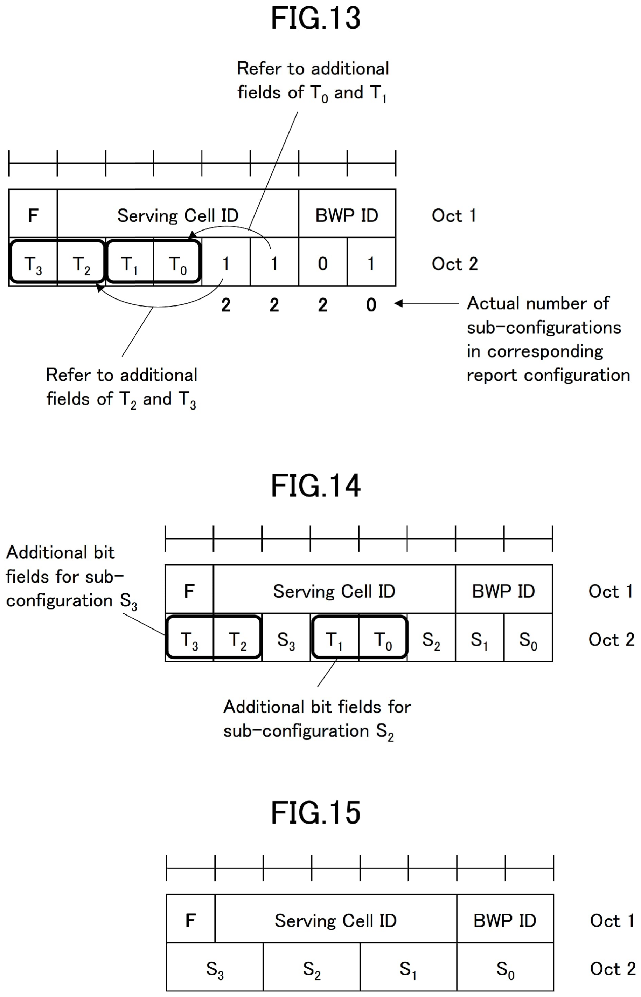

Fig. 12 is a drawing illustrating an example (4) of MAC-CE related to an embodiment of the present invention. Fig. 13 is a drawing illustrating an example (5) of MAC-CE related to an embodiment of the present invention. Fig. 14 is a drawing illustrating an example (6) of MAC-CE related to an embodiment of the present invention.
Fig. 12, Fig. 13, and Fig. 14 illustrate examples satisfying the following in the above-described Operation 2-1).
(a-1) Field of bitmap
(b-4) Present only in a case where both the above-described b-2 and the above-described b-3 are satisfied.
(c-2) The bit length may be determined based on the actual number of sub-configurations of the corresponding CSI report configuration.

As illustrated in Fig. 12, additional bit fields for sub-configurations may be arranged together after Sᵢ. Fig. 13 is a drawing in which values are configured to Sᵢ in Fig. 12. As illustrated in Fig. 13, there is no additional field corresponding to S₀ and S₁. The additional fields corresponding to S₂ are T₀ and T₁, and the additional fields corresponding to S₃ are T₂ and T₃. As illustrated in Fig. 14, additional bit fields for sub-configurations may be arranged adjacent to the corresponding Sᵢ.

S₀ corresponds to the report configuration that includes PUCCH resources for SP CSI reporting in the indicated BWP and has the lowest CSI-ReportConfigId or the lowest ID defined in Operation 1) in the list in which type is configured to be semiPersistentOnPUCCH. The same thing applies to S₁ and the subsequent fields.

The bit field F in Fig. 12 and the bit field F in Fig. 14 may be defined as described below.
(Alt. 1) The field is a field for indicating the bit length of the MAC-CE field. For example, the value 0/1 may indicate the bit length 16 bits/24 bits of the MAC-CE field.
Alt. 2) The field may indicate whether CSI corresponding to the activated sub-configuration in the report configuration is to be reported by using the separated CSI or by using the joint CSI (with/without overhead reduction).

In a case where Sᵢ is configured to be 0 and there is no sub-configuration in the corresponding report configuration, the report configuration may be deactivated. In a case where Sᵢ is configured to be 0 and there are sub-configurations in the corresponding report configuration, all of the sub-configurations may be deactivated. In a case where Sᵢ is configured to be 0, there may be no additional field for sub-configurations.

In a case where Sᵢ is configured to be 1 and there is no sub-configuration in the corresponding report configuration, the report configuration may be activated. In a case where Sᵢ is configured to be 1 and there is N (N=1) sub-configuration in the corresponding report configuration, the sub-configuration may be activated and the additional field is not required to be present.

In a case where there are N (N>1) sub-configurations in the corresponding report configuration, the additional fields may be N bits, and the bit index k may be described as k = {j, j+1, ..., J+N-1}. The j-th bit may correspond to the first sub-configurations ordered by sub-configuration IDs defined in Operation 1) in the report configuration. The same thing applies to the j-th bit and the subsequent bits. k = {0, 1, ..., j-1} are bits that are assigned to the additional fields of the sub-configurations of the immediately preceding report configuration.

In addition, in a case where there are N (N>1) sub-configurations in the corresponding report configuration, the additional fields may be N bits and may be arranged subsequent to the corresponding Sᵢ. The first bit of the additional fields may correspond to the first sub-configuration in the order of the sub-configuration IDs in the corresponding report configuration.

Activation of the corresponding sub-configuration may be indicated by configuring Tₖ to be 1. Deactivation of the corresponding sub-configuration may be indicated by configuring Tₖ to be 0.

Fig. 15 is a drawing illustrating an example (7) of MAC-CE related to an embodiment of the present invention. Fig. 15 illustrates an example satisfying the following in Operation 2-2).
(d-1) Fixed bit length. For example, the fixed bit length may be determined based on the maximum number of sub-configurations per CSI report configuration. In an example illustrated in Fig. 15, Sᵢ is two bits.

S₀ corresponds to the report configuration that includes PUCCH resources for SP CSI reporting in the indicated BWP and has the lowest CSI-ReportConfigId or the lowest ID defined in Operation 1) in the list in which type is configured to be semiPersistentOnPUCCH. The same thing applies to S₁ and the subsequent fields.

The bit field F in Fig. 12 and the bit field F in Fig. 14 may be defined as described below.
(Alt. 1) The field is a field for indicating the bit length of the MAC-CE field. For example, the value 0/1 may indicate the bit length 16 bits/24 bits of the MAC-CE field.
Alt. 2) The field may indicate whether CSI corresponding to the activated sub-configuration in the report configuration is to be reported by using the separated CSI or by using the joint CSI (with/without overhead reduction).

The bit size of Sᵢ may be fixed and configured based on the maximum number of sub-configurations per report configuration. In a case where the number of sub-configurations per report configuration is 2, the bit size of Sᵢ may be 2. Table 1 illustrates the definition of operations of performing activation or deactivation based on the value of Sᵢ whose bit size is 2.

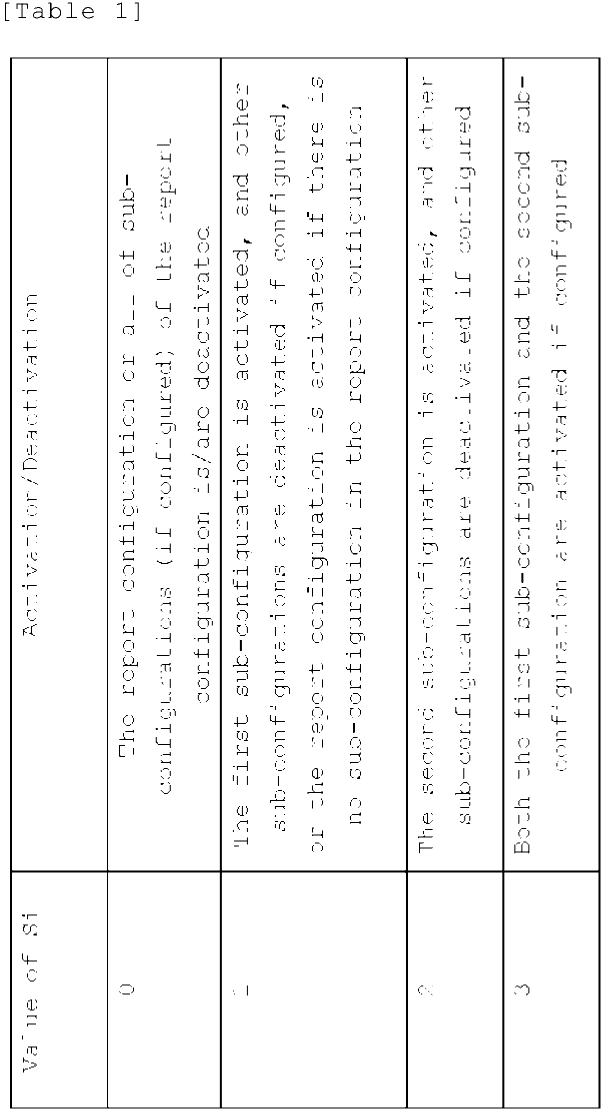

As illustrated in Table 1, activated sub-configurations are specified based on the value of Sᵢ. Particularly, in a case where Sᵢ is equal to 1 and there is no sub-configuration, the corresponding report configuration is activated.

The sub-configurations of a report configuration are ordered based on the sub-configuration IDs defined in Operation 1).

In a case where the number of sub-configurations per report configuration is 3, the bit size of Sᵢ may be 3. Table 2 illustrates the definition of operations of performing activation or deactivation based on the value of Sᵢ whose bit size is 3.

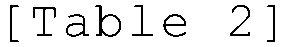

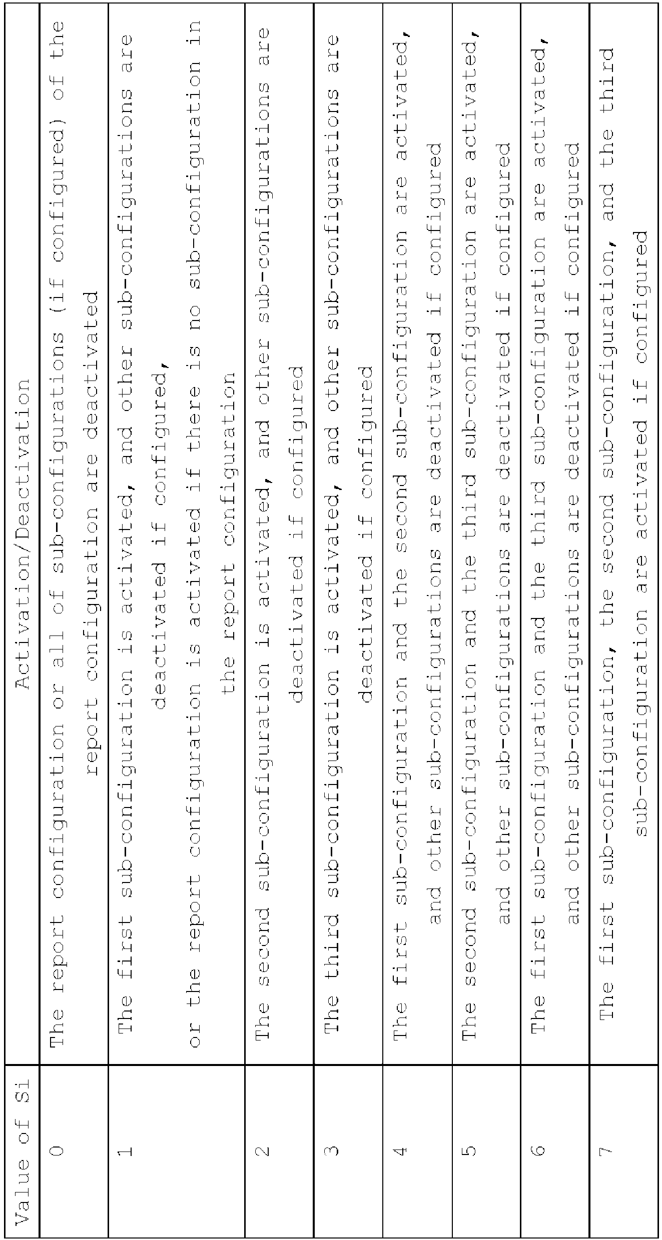

As illustrated in Table 2, activated sub-configurations are specified based on the value of Sᵢ. Particularly, in a case where Sᵢ is equal to 1 and there is no sub-configuration, the corresponding report configuration is activated.

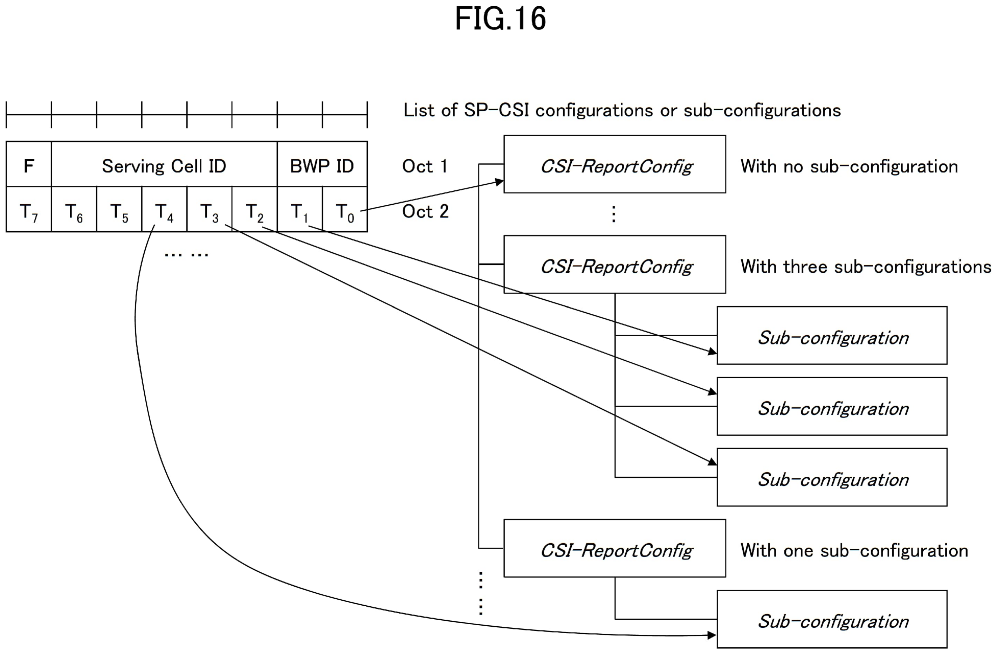

Fig. 16 is a drawing illustrating an example of activation or deactivation of a sub-configuration related to an embodiment of the present invention. Fig. 16 illustrates an example satisfying the following in Operation 2-3).
(e-1) One 1-bit field may be configured for each SP-CSI report configuration without sub-configurations or for each sub-configuration.

T₀ may correspond to a report configuration or a sub-configuration corresponding to the smallest sub-configuration ID defined in Operation 1-1-2) or Operation 1-2) in the list in which type is configured to be semiPersistentOnPUCCH.

The bit field F in Fig. 16 may be defined as described below.
(Alt. 1) The field is a field for indicating the bit length of the MAC-CE field. For example, the value 0/1 may indicate the bit length 16 bits/24 bits of the MAC-CE field.
Alt. 2) The field may indicate whether CSI corresponding to the activated sub-configuration in the report configuration is to be reported by using the separated CSI or by using the joint CSI (with/without overhead reduction).

Activation of the corresponding report configuration or sub-configuration may be indicated by configuring Tᵢ to be 1. Deactivation of the corresponding report configuration or sub-configuration may be indicated by configuring Tᵢ to be 0.

Hereinafter, "Operation 3) SP-CSI report on PUSCH" will be described.

According to the base station configuration and/or UE capability, the maximum value described in the following 1) to 6) or the maximum value of a total of some of the following 1) to 6) may be limited to a value based on a fixed value or a configured value.
1) The number of configured and/or activated report configurations of SP-CSI on PUSCH
2) The number of configured and/or activated report configurations in which sub-configurations of SP-CSI on PUSCH are configured
3) The number of configured and/or activated report configurations in which sub-configurations of SP-CSI on PUSCH are not configured
4) The number of configured and/or activated report configurations in which a number of sub-configurations of SP-CSI on PUSCH are configured, the number of sub-configurations being greater than a predetermined number (for example, 0 or 1).
5) The number of configured and/or activated report configurations in which sub-configurations of SP-CSI on PUSCH are not configured or a number of sub-configurations of SP-CSI on PUCCH are configured, the number of sub-configurations being equal to or less than a predetermined value (for example, 1 or 2).
6) The number of configured and/or activated sub-configurations of SP-CSI on PUCCH

Operation 3-1) All of the sub-configurations included in one report configuration may be simultaneously activated or deactivated. SP-CSI on PUSCH may be triggered by the legacy DCI. In a case where one trigger state is activated and the report configuration does not include a sub-configuration, the CSI report may be activated or deactivated. Alternatively, in a case where one or a plurality of sub-configurations are included in the report configuration, all of the sub-configurations may be activated or deactivated.

Operation 3-2) DCI may trigger sub-configurations in the report configuration.

The sub-configurations may be triggered as described below.
(a-1) Field of bitmap may be used. One bit corresponds to one sub-configuration in the report configuration. The bit length may be equal to the maximum number of sub-configurations per CSI report configuration. For example, in a case where the maximum number of sub-configurations per CSI report configuration is 2, the bit length may be two bits.
(a-2) Codepoint table in which one or a plurality of sub-configurations are mapped may be used. The bit length may be configured based on the maximum number of sub-configurations per CSI report configuration, or may be less than the maximum number.

The bit for triggering a sub-configuration may be included in any one of the CSI request field, other fields, or a new field. The number of bits for triggering a sub-configuration in DCI may be configured to be 0 to 2, 0 to 3, or 0 to 4 by using RRC signaling. For example, the number of bits may be configured as described below.
reportTriggerSubSizeDCI-0-2-r18 INTEGER (0..2)/INTEGER (0..3) / INTEGER (0..4)
reportTriggerSubSize-r18 INTEGER (0..2)/INTEGER (0..3)/INTEGER (0..4)

The maximum number of triggers for SP-CSI report on PUSCH may be reduced. For example, in a case where the maximum number of sub-configurations per CSI report configuration is 2 or in a case where two bits are used for triggering sub-configurations, the maximum number of triggers for SP-CSI report on PUSCH may be reduced from 64 to 16. In other words, up to four bits may be used for an indication of trigger states of SP-CSI report.

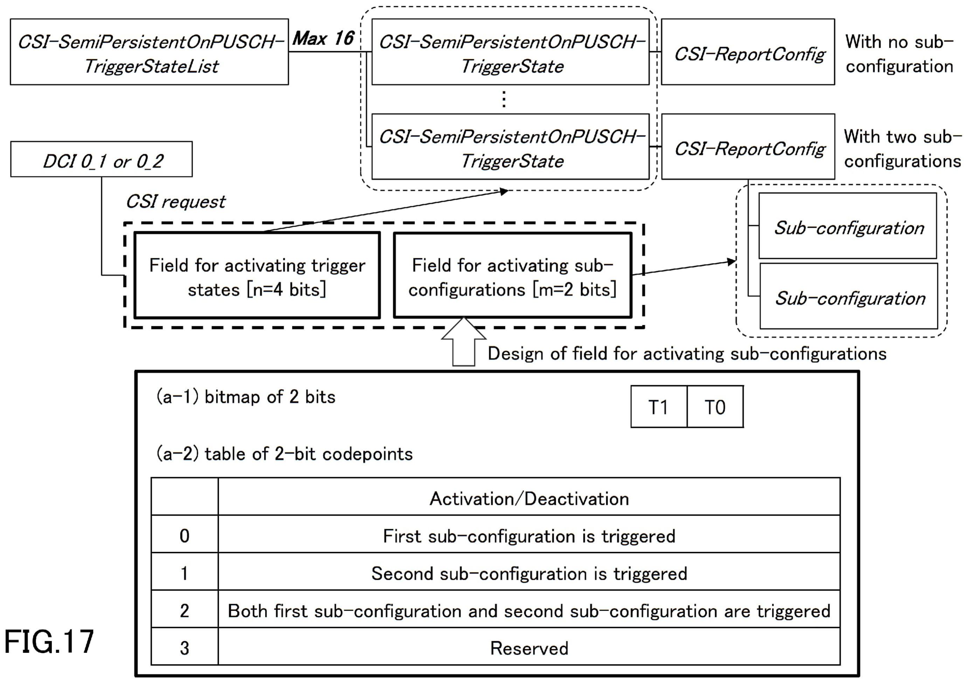

Fig. 17 is a drawing illustrating an example (1) of a trigger of a sub-configuration related to an embodiment of the present invention. Fig. 17 illustrate an example satisfying the following in Operation 3-2).
(a-1) Bitmap of two bits, or
(a-2) Codepoint table of two bits

As illustrated in Fig. 17, the field for activating the trigger state included in the CSI request in DCI is used for specifying the CSI-SemiPersistentOnPUSCH-TriggerState to be activated, and the field for activating sub-configurations is used for specifying the Sub-configuration to be activated.

The field for activating the trigger state is n bits at the beginning of the CSI request field, and n may be {0, 1, 2, 3, 4}, for example. The field activates one trigger state for SP-CSI on PUSCH.

The field for activating sub-configurations is m bits at the ending of the CSI request field, and m may be {0, 1, 2, 3, 4}, for example. In a case where a sub-configuration is configured or in a case where more than one sub-configurations are configured, the above-described field activates one or a plurality of sub-configurations corresponding to the activated trigger states. Fig. 17 is an example in which m is equal to 2.

The sub-configurations in one SP-CSI report configuration may be ordered based on sub-configuration IDs defined in Operation 1), for example. The i-th sub-configuration may be a sub-configuration whose sub-configuration ID is the i-th smallest sub-configuration ID.

In a case where there is no sub-configuration in the corresponding report configuration with respect to the trigger state that is activated by the field for activating the trigger state, the SP-CSI corresponding to the activated trigger state may be triggered. The terminal 20 may ignore the field for activating sub-configurations.

In a case where there is one sub-configuration in the corresponding report configuration with respect to the trigger state that is activated by the field for activating the trigger state, the SP-CSI corresponding to the sub-configuration may be triggered. The terminal 20 may ignore the field for activating sub-configurations.

In a case where there are a plurality of sub-configurations in the corresponding report configuration with respect to the trigger state that is activated by the field for activating the trigger state, the terminal 20 may refer to the field for activating sub-configurations: and (a-1) may trigger the i-th sub-configuration if Tᵢ is configured to be 1. The terminal 20 may ignore the bit of Tᵢ if the number of sub-configurations is less than i.

Alternatively,
(a-2) The terminal 20 may trigger sub-configurations based on the table of (a-2) illustrated in Fig. 17.

Table 3 is an example of a table for a case in which the maximum number of sub-configurations per CSI report configuration is 3.

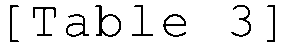

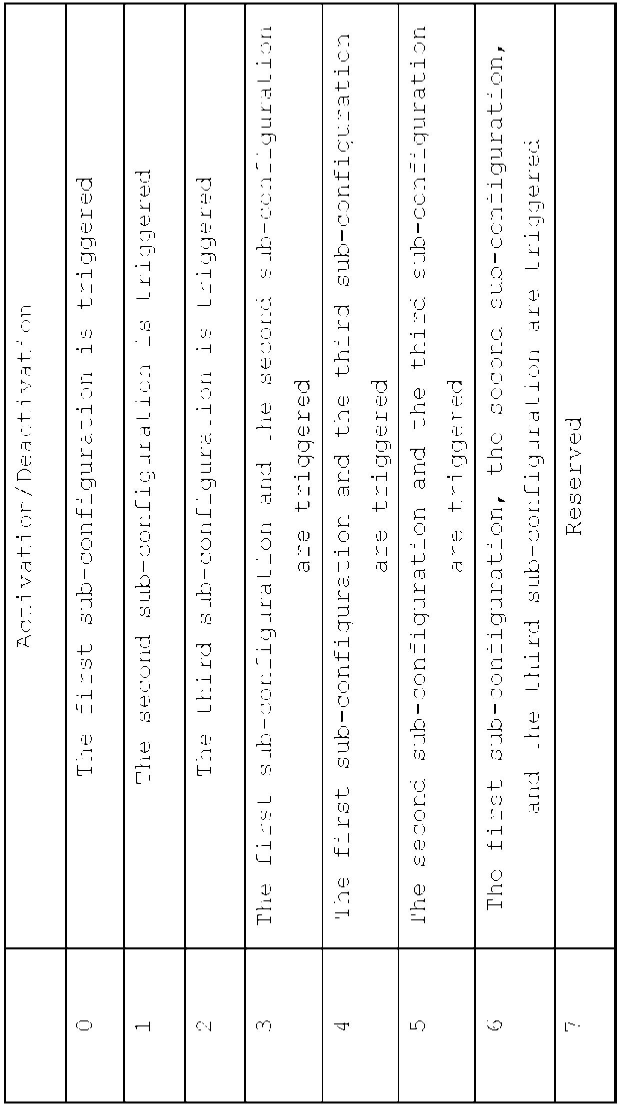

Operation 3-3) RRC signaling may indicate which sub-configuration of the activated report configuration is to be used for reporting CSI. A new IE for triggering sub-configurations in CSI-SemiPersistentOnPUSCH-TriggerState may be defined. The above-described IE may indicate which sub-configuration is to be triggered. With respect to the corresponding UE operation, an example of Operation 3-2) may be referred to.

Operation 3-4) With respect to the activated sub-configuration in one report configuration, the base station 10 may indicate, to the terminal 20, whether the CSI corresponding to the activated sub-configuration is a separated CSI or a joint CSI. With respect to the joint CSI, the overhead may be or may not be reduced. As an example of the overhead reduction, the differential or joint coded CSI values may be the same amount across a plurality of CSIs.

The base station 10 may use a bit field of DCI for the above-described indication. For example, with respect to a one-bit field, the value 0 may indicate a separated CSI and the value 1 may indicate a joint CSI with overhead reduction. For example, with respect to a two-bit field, the value 0 may indicate a separated CSI, the value 1 may indicate a joint CSI with common CSI, the value 2 may indicate a joint CSI with differential CSI, and the value 3 may indicate a joint CSI with joint coded CSI.

In addition, the base station 10 may define a new IE in RRC signaling for the above-described indication, or an existing IE may be reused.

For example, a new report quantity type may be defined for reportQuantity. In addition, a new IE included in CSI-ReportConfig, CSI-reportSubConfig (defined in Operation 1), or CSI-SemiPersistentOnPUSCH-TriggerState may be defined.

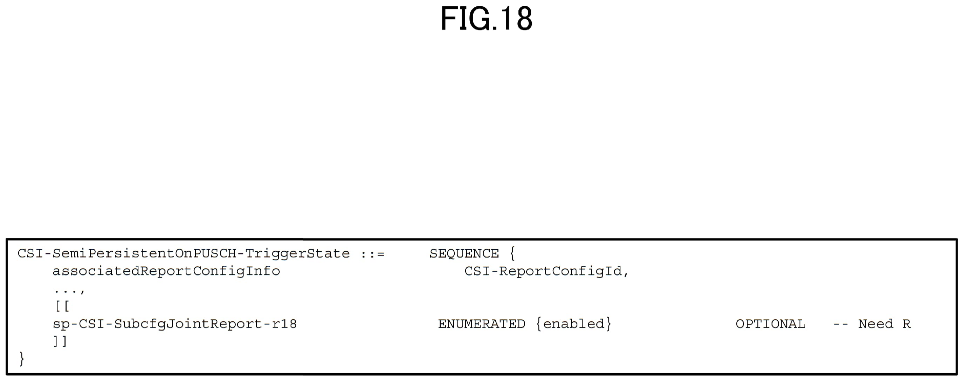

Fig. 18 is a drawing illustrating an example (5) of a change of RRC specification related to an embodiment of the present invention. Fig. 18 illustrates an example in which the new IE sp-CSI-SubcfgJointReport-R18 is included in CSI-SemiPersistentOnPUSCH-TriggerState. In a case where sp-CSI-SubcfgJointReport-R18 is configured, one joint CSI with overhead reduction may be reported. In a case where sp-CSI-SubcfgJointReport-R18 is not configured, a separated CSI may be reported.

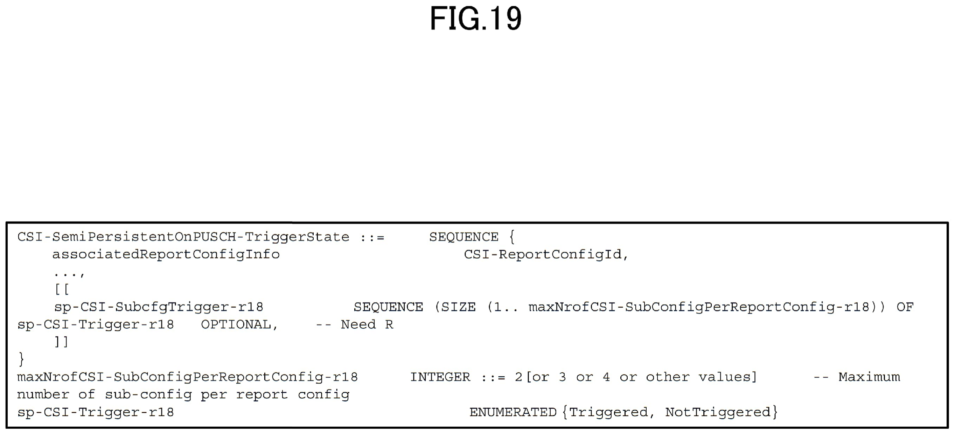

Fig. 19 is a drawing illustrating an example (6) of a change of RRC specification related to an embodiment of the present invention. Fig. 19 illustrates an example of Operation 3-3). The triggered sub-configurations may be specified by up to maxNrofCSI-SubConfigPerReportConfig-r18 sp-CSI-Trigger-r18s.

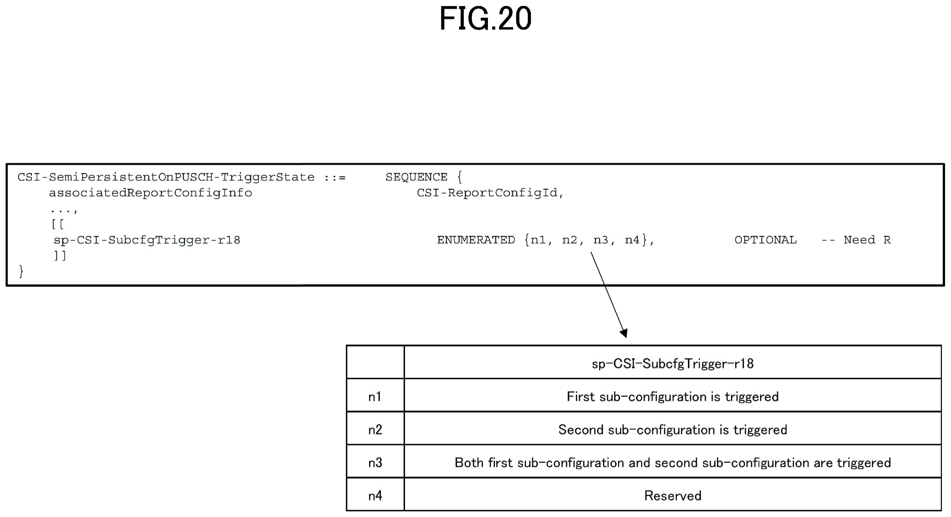

Fig. 20 is a drawing illustrating an example (7) of a change of RRC specification related to an embodiment of the present invention. Fig. 20 illustrates an example of Operation 3-3). The triggered sub-configurations may be specified by sp-CSI-SubcfgTrigger-r18. According to the table illustrated in Fig. 20, the first sub-configuration may be triggered in a case of the value n1, the second sub-configuration may be triggered in a case of the value n2, and the first sub-configuration and the second sub-configuration may be triggered in a case of the value n3.

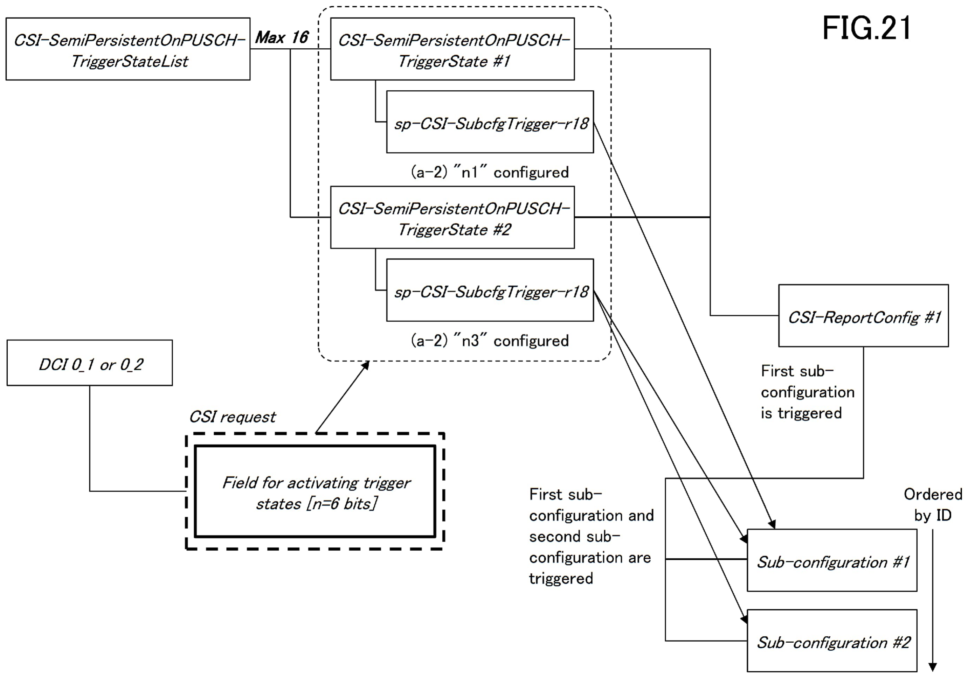

Fig. 21 is a drawing illustrating an example (2) of a trigger of a sub-configuration related to an embodiment of the present invention. Fig. 21 illustrates an example of Operation 3-3).

In Fig. 21, the field for activating the trigger state may be the same as the legacy CSI request field. The sub-configurations in one SP-CSI report configuration may be ordered based on sub-configuration IDs defined in Operation 1). The i-th sub-configuration may be a sub-configuration whose sub-configuration ID is the i-th smallest sub-configuration ID.

In a case where there is no sub-configuration in the corresponding report configuration with respect to the trigger state that is activated by the field for activating the trigger state, the SP-CSI corresponding to the activated trigger state may be triggered. The terminal 20 may ignore sp-CSI-SubcfgTrigger-r18 included in the activated CSI-SemiPersistentOnPUSCH-TriggerState.

In a case where there is one sub-configuration in the corresponding report configuration with respect to the trigger state that is activated by the field for activating the trigger state, the SP-CSI corresponding to the sub-configuration may be triggered. The terminal 20 may ignore sp-CSI-SubcfgTrigger-r18 included in the activated CSI-SemiPersistentOnPUSCH-TriggerState.

In a case where there are a plurality of sub-configurations in the corresponding report configuration with respect to the trigger state that is activated by the field for activating the trigger state, the terminal 20 may refer to sp-CSI-SubcfgTrigger-r18 included in the activated CSI-SemiPersistentOnPUSCH-TriggerState, and
(a-1) the i-th sub-configuration may be triggered in a case where the i-th sp-CSI-SubcfgTrigger-r18 is Triggered. The terminal 20 may ignore the i-th activated sp-CSI-SubcfgTrigger-r18 in a case where the number of sub-configurations is less than i.

Alternatively,
(a-2) The terminal 20 may trigger sub-configurations based on the codepoint table.

In a case where there are a plurality of sub-configurations in the corresponding report configuration and sp-CSI-SubcfgTrigger-r18 is not included in the activated CSI-SemiPersistentOnPUSCH-TriggerState, the terminal 20 may trigger all of the sub-configurations, may trigger the first sub-configuration alone, or is not required to trigger a sub-configuration.

Hereinafter, "Operation 4) Aperiodic CSI report on PUSCH" will be described.

Operation 4-1) All of the sub-configurations included in one report configuration may be simultaneously triggered. The method using the legacy MAC-CE and the legacy DCI may be reused for A-CSI on PUSCH.

In a case where one CSI-AssociatedReportConfigInfo is triggered and no sub-configuration is included in the report configuration, the CSI report may be triggered. Alternatively, in a case where one of the CSI-AssociatedReportConfigInfos is triggered and one or a plurality of sub-configurations are included in the report configuration, all of the sub-configurations may be triggered.

Operation 4-2) RRC signaling may indicate which sub-configuration CSI of the activated report configuration is to be reported.

Operation 4-2-1) In order to trigger sub-configurations, a new IE included in CSI-AssociatedReportConfigInfo may be defined. The above-described IE indicates which sub-configuration is to be triggered.

(a-1) Bitmap or IE map may be used for triggering sub-configurations. One bit or a new IE may correspond to one sub-configuration. The bit length or the number of IEs may be equal to the maximum number of sub-configurations per CSI report configuration.

(a-2) Codepoint table may be used for triggering sub-configurations.

Operation 4-2-2) In order to trigger sub-configurations, a new IE included in CSI-AperiodicTriggerState may be defined. The above-described IE indicates which sub-configuration is to be triggered.

The configuration for triggering sub-configurations may be applied to all of the report configurations or all of the AssociatedReportConfigInfos included in one CSI-AperiodicTriggerState. (a-1) bitmap and (a-2) codepoint table may be used for triggering sub-configurations. The UE operation may be the same as Operation 4-2-1).

Operation 4-3) DCI may indicate which sub-configuration CSI of the activated report configuration is to be reported. The bit for triggering a sub-configuration may be included in the CSI request field, may be included in other fields, or may be included in a new field. The configuration for triggering sub-configurations may be applied to all of the report configurations or all of the AssociatedReportConfigInfos included in one CSI-AperiodicTriggerState. The UE operation may be the same as Operation 4-2-2).

Operation 4-4) With respect to the activated sub-configuration in one report configuration, the base station 10 may indicate, to the terminal 20, whether the CSI corresponding to the activated sub-configuration is a separated CSI or a joint CSI. With respect to the joint CSI, the overhead may be or may not be reduced. As an example of the overhead reduction, the differential or joint coded CSI values may be the same amount across a plurality of CSIs.

A bit field used for the above-described indication may be defined in DCI. For example, with respect to a one-bit field, the value 0 may indicate a separated CSI and the value 1 may indicate a joint CSI with overhead reduction. For example, with respect to a two-bit field, the value 0 may indicate a separated CSI, the value 1 may indicate a joint CSI with common CSI, the value 2 may indicate a joint CSI with differential CSI, and the value 3 may indicate a joint CSI with joint coded CSI. The above-described indication may be applied to all of the report configurations or all of the AssociatedReportConfigInfos included in one CSI-AperiodicTriggerState.

A new IE used for the above-described indication may be defined in RRC signaling, or an existing IE may be reused. For example, a new IE may be defined for report configuration. A new report quantity type may be defined for reportQuantity. A new IE included in CSI-ReportConfig, CSI-ReportSubConfig, or CSI-AssociatedReportConfigInfo may be defined. The above-described IE may be applied only to the report configuration corresponding to CSI-ReportConfig or CSI-AssociatedReportConfigInfo

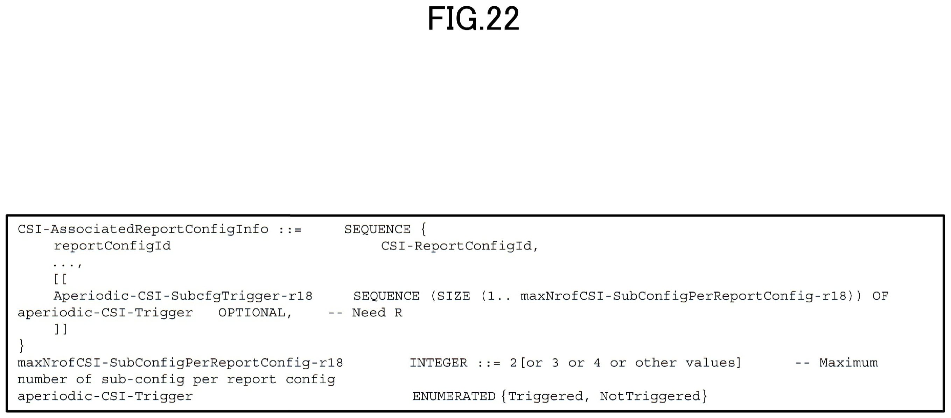

Fig. 22 is a drawing illustrating an example (8) of a change of RRC specification related to an embodiment of the present invention. Fig. 22 illustrates an example of a case in which (a-1) is applied for Operation 4-2-1). Aperiodic-CSI-SubcfgTrigger-r18 is a bitmap whose length is up to maxNrofCSI-SubConfigPerReportConfig-r18 bits.

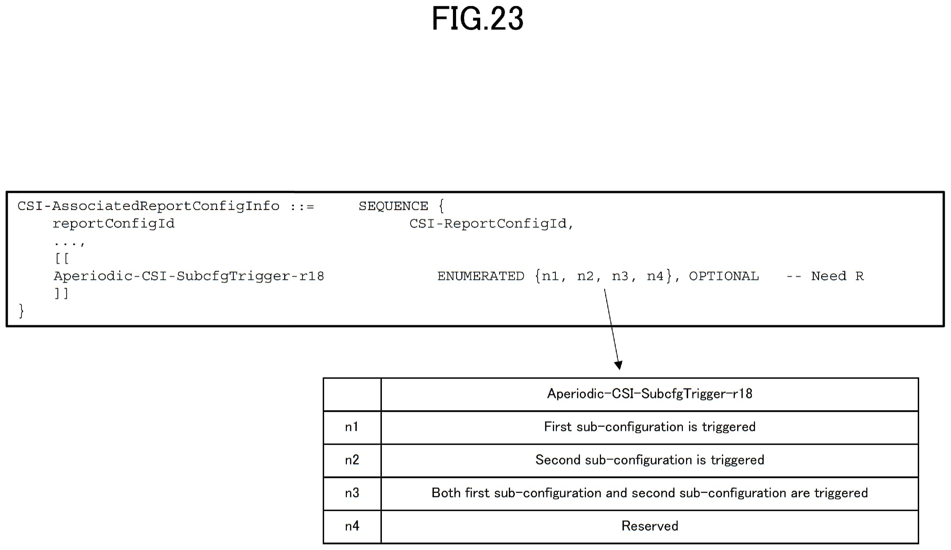

Fig. 23 is a drawing illustrating an example (9) of a change of RRC specification related to an embodiment of the present invention. Fig. 23 illustrates an example of a case in which (a-2) is applied for Operation 4-2-1). Sub-configurations to be triggered are triggered by codepoints from n1 to n4 specified by Aperiodic-CSI-SubcfgTrigger-r18.

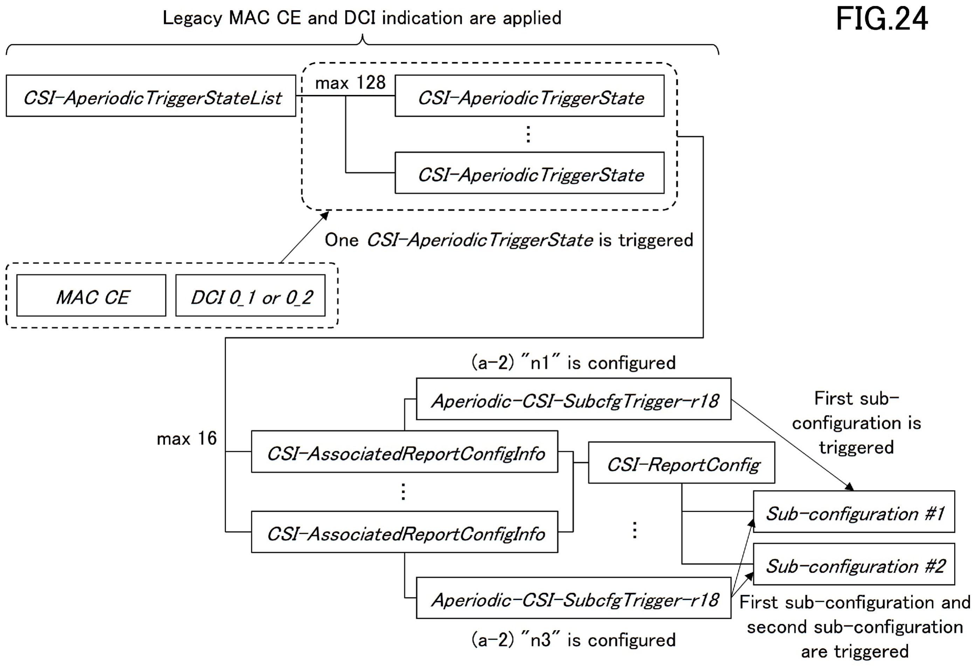

Fig. 24 is a drawing illustrating an example (3) of a trigger of a sub-configuration related to an embodiment of the present invention. Fig. 24 illustrates an example of a case in which (a-2) is applied for Operation 4-2-1).

The legacy MAC-CE and the legacy DCI may be used for triggering one CSI-AperiodicTriggerState. The sub-configurations in one A-CSI report configuration may be ordered based on sub-configuration IDs defined in Operation 1, for example.

With respect to the triggered CSI-AperiodicTriggerState, the terminal 20 may check each of the CSI-AssociatedReportConfigInfos included in the CSI-AperiodicTriggerState, and may perform an operation as described in the following 1) to 3).
1) In a case where there is no sub-configuration in the report configuration of the triggered CSI-AssociatedReportConfigInfo, A-CSI corresponding to the report configuration may be triggered. The terminal 20 may ignore Aperiodic-CSI-SubcfgTrigger-r18.
2) In a case where there is one sub-configuration in the report configuration of the triggered CSI-AssociatedReportConfigInfo, A-CSI corresponding to the sub-configuration may be triggered. The terminal 20 may ignore Aperiodic-CSI-SubcfgTrigger-r18.
3) In a case where there are a plurality of sub-configurations in the report configuration of the triggered CSI-AssociatedReportConfigInfo, A-CSIs corresponding to the sub-configurations may be triggered. The terminal 20 may refer to Aperiodic-CSI-SubcfgTrigger-r18, and
   (a-1) the i-th sub-configuration may be triggered in a case where the i-th Aperiodic-CSI-SubcfgTrigger-r18 is Triggered. The terminal 20 may ignore the i-th Aperiodic-CSI-SubcfgTrigger-r18 in a case where the number of sub-configurations is less than i.

Alternatively,
(a-2) the terminal 20 may trigger sub-configurations based on the codepoint table.

In a case where there are a plurality of sub-configurations in the report configuration of the triggered CSI-AssociatedReportConfigInfo and Aperiodic-CSI-SubcfgTrigger-r18 is not included in the triggered CSI-AssociatedReportConfigInfo, the terminal 20 may trigger all of the sub-configurations, may trigger only the first sub-configuration, or is not required to trigger sub-configurations.

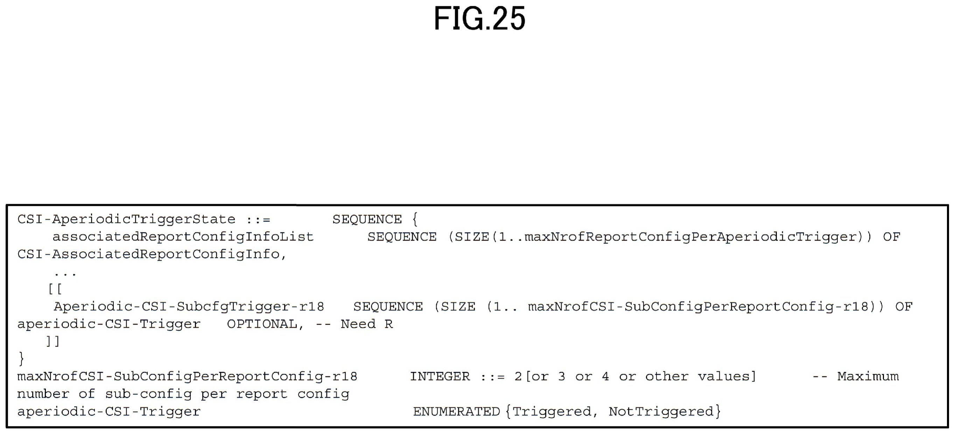

Fig. 25 is a drawing illustrating an example (10) of a change of RRC specification related to an embodiment of the present invention. Fig. 25 illustrates an example in which (a-1) is applied for Operation 4-2-2). Aperiodic-CSI-SubcfgTrigger-r18 is a bitmap whose length is up to maxNrofCSI-SubConfigPerReportConfig-r18 bits.

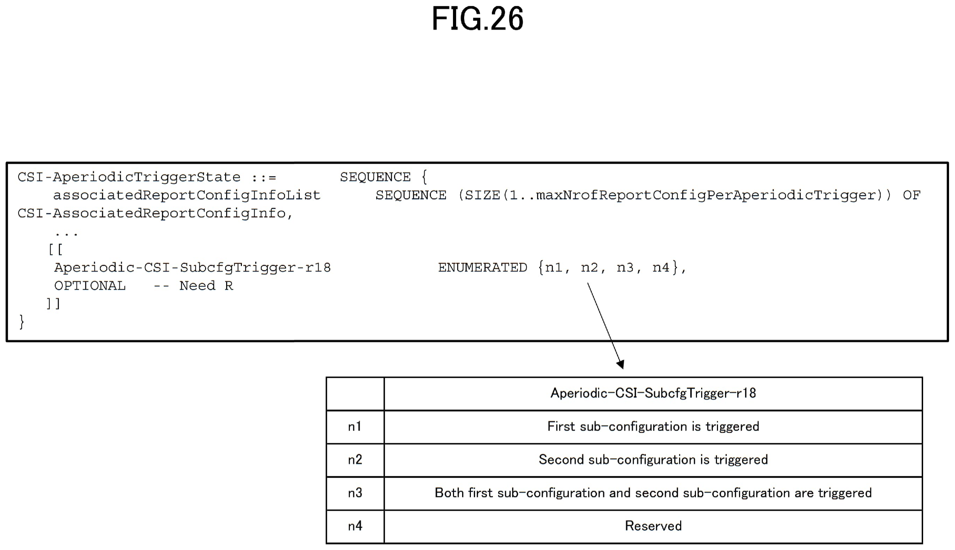

Fig. 26 is a drawing illustrating an example (11) of a change of RRC specification related to an embodiment of the present invention. Fig. 26 illustrates an example of a case in which (a-2) is applied for Operation 4-2-2). Sub-configurations to be triggered are triggered by codepoints from n1 to n4 specified by Aperiodic-CSI-SubcfgTrigger-r18.

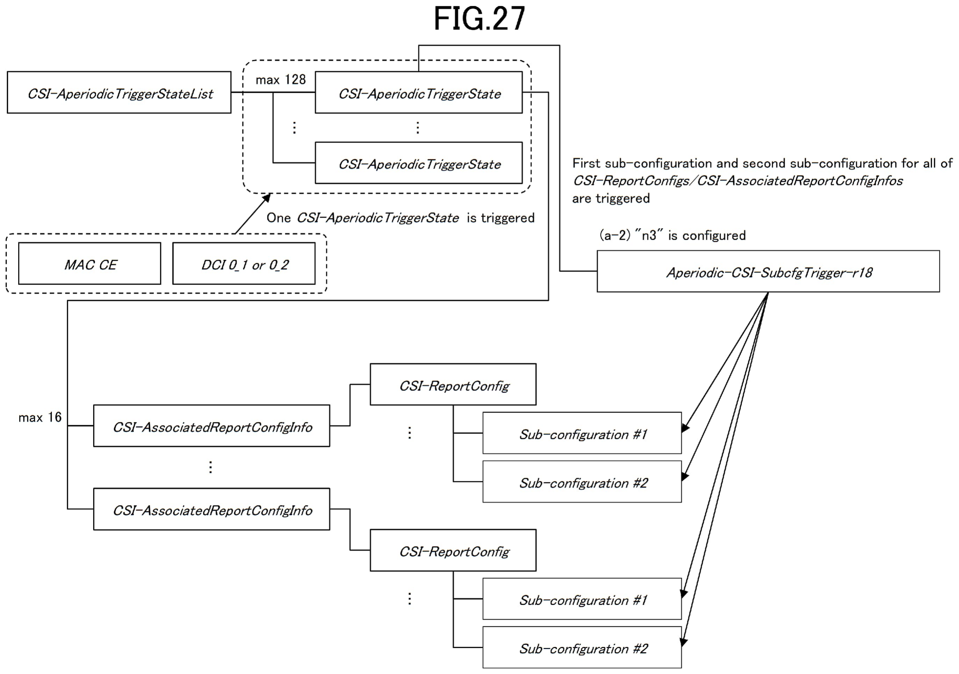

Fig. 27 is a drawing illustrating an example (4) of a trigger of a sub-configuration related to an embodiment of the present invention. Fig. 27 illustrates an example in which (a-2) is applied for Operation 4-2-2). As illustrated in Fig. 27, one CSI-AperiodicTriggerState is triggered by MAC-CE and DCI. The first sub-configuration and the second sub-configuration in all of the CSI-ReportConfigs or CSI-AssociatedReportConfigInfos are triggered by having n3 configured in Aperiodic-CSI-SubcfgTrigger-r18.

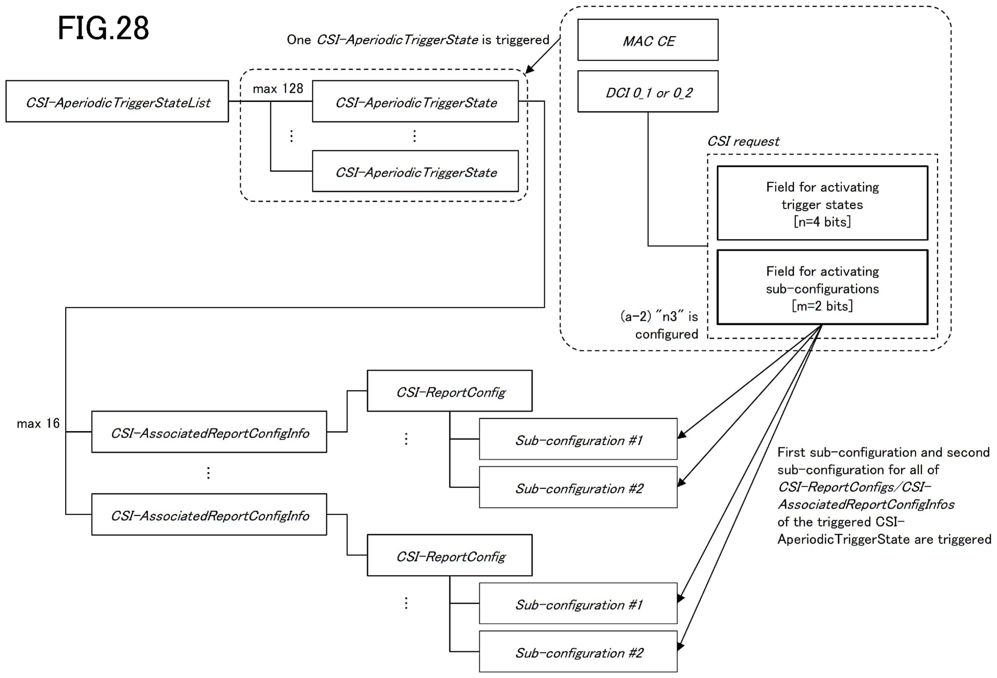

Fig. 28 is a drawing illustrating an example (5) of a trigger of a sub-configuration related to an embodiment of the present invention. Fig. 28 illustrates an example in which (a-2) is applied for Operation 4-3). As illustrated in Fig. 28, one CSI-AperiodicTriggerState is triggered by the field for activating the trigger state included in the CSI request. The first sub-configuration and the second sub-configuration in all of the CSI-ReportConfigs or CSI-AssociatedReportConfigInfos are triggered by having n3 configured in the field for activating sub-configurations.

According to an embodiment of the present invention, the terminal 20 can perform an operation related to activation and triggering of sub-configurations included in the CSI report configuration related to measurement and report, and can perform CSI reporting to the base station 10.

In other words, procedures related to CSI (Channel state information) related to measurement and report can be enhanced in the wireless communication system.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

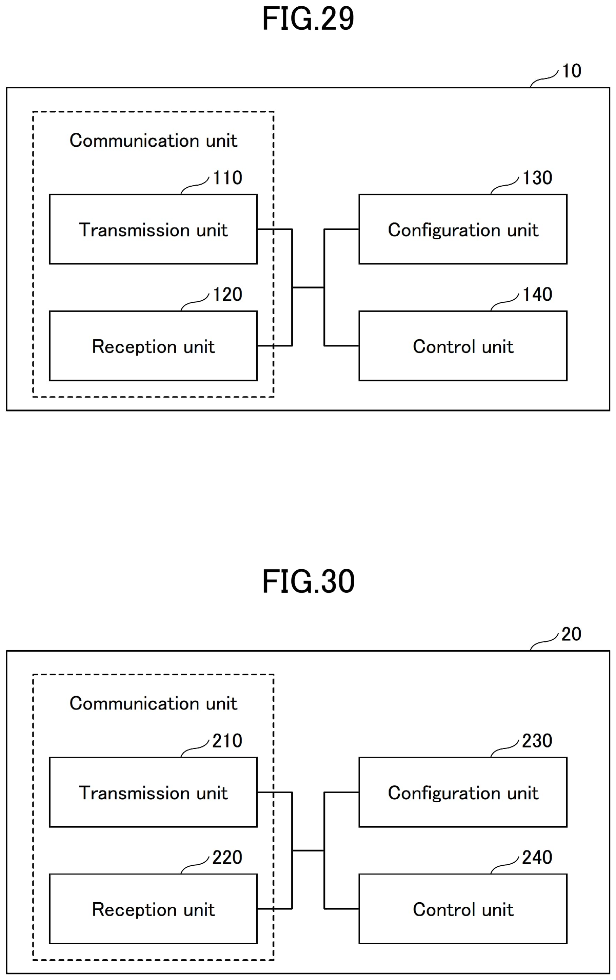

Fig. 29 is a drawing illustrating an example of a functional structure of a base station 10 according to an embodiment of the present invention. As shown in Fig. 29, the base station 10 includes a transmission unit 110, a reception unit 120, a configuration unit 130, and a control unit 140. The functional configuration illustrated in Fig. 29 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. Further, the transmission unit 110 transmits an inter-network-node message to another network node. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, and the like to the terminal 20. Further, the reception unit 120 receives an inter-network-node message from another network node.

The configuration unit 130 stores preset information and various configuration information items to be transmitted to the terminal 20. Contents of the configuration information are, for example, information related to CSI measurement and report.

The control unit 140 performs control that enables functions described in an embodiment of the present invention. In addition, the control unit 140 performs control related to CSI measurement and report as described in an embodiment of the present invention. The functional units related to signal transmission in the control unit 140 may be included in the transmission unit 110, and the functional units related to signal reception in the control unit 140 may be included in the reception unit 120.

### <Terminal 20>

Fig. 30 is a drawing illustrating an example of a functional structure of a terminal 20 according to an embodiment of the present invention. As shown in Fig. 30, the terminal 20 includes a transmission unit 210, a reception unit 220, a configuration unit 230, and a control unit 240. The functional configuration illustrated in Fig. 30 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, etc.

The configuration unit 230 stores various configuration information items received by the reception unit 220 from the base station 10. In addition, the configuration unit 230 also stores pre-configured configuration information. Contents of the configuration information are, for example, information related to CSI measurement and report.

The control unit 240 performs control that enables functions described in an embodiment of the present invention. In addition, the control unit 240 performs control related to CSI measurement and report as described in an embodiment of the present invention. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 29 and Fig. 30) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmitting unit or a transmitter. The method for implementing each component is not particularly limited as described above.

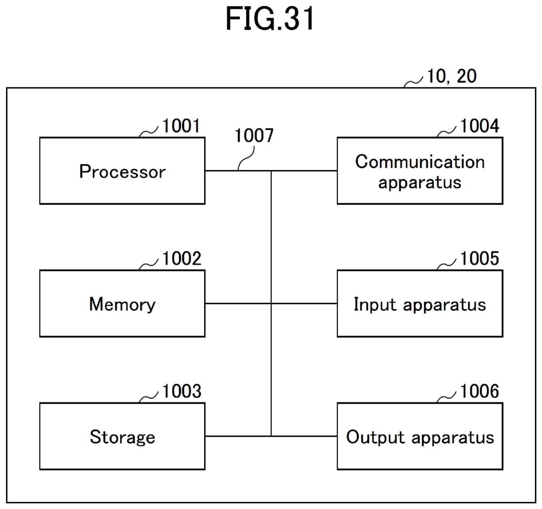

For example, the base station 10, the terminal 20, etc., according to an embodiment of the present disclosure may function as a computer for processing the radio communication method of the present disclosure. Fig. 31 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 29 may be implemented by control programs that are stored in the memory 1002 and that operate on the processor 1001. In addition, for example, the control unit 240 of the terminal 20 illustrated in Fig. 30 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

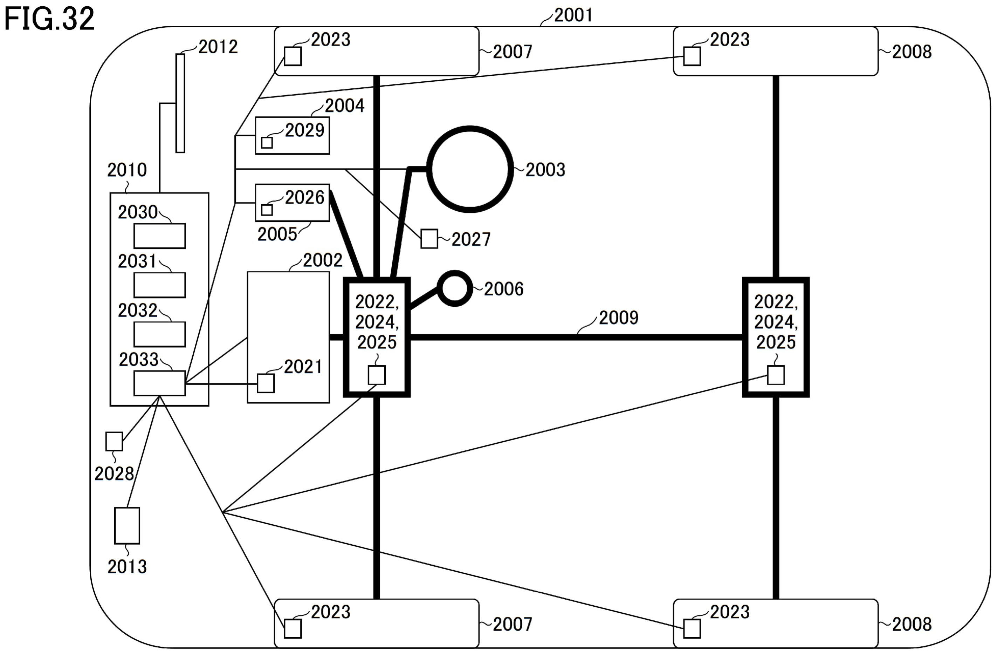

Fig. 32 shows an example of a configuration of a vehicle 2001. As shown in Fig. 32, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 that senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a reception unit configured to receive, from a base station, a configuration related to a CSI (Channel state information) report; a control unit configured to perform measurement of a CSI-RS (Reference signal) transmitted from the base station, based on a report configuration included in the configuration; and a transmission unit configured to transmit a CSI report to the base station, based on a result of the measurement. The control unit activates an SP (Semi-persistent) - CSI corresponding to a sub-configuration or triggers an A (Aperiodic) - CSI, based on an identifier used for identifying the sub-configuration included in the report configuration.

According to the above-described configuration, the terminal 20 can perform an operation related to activation and triggering of sub-configurations included in the CSI report configuration related to measurement and report, and can perform CSI reporting to the base station 10. In other words, procedures related to CSI (Channel state information) related to measurement and report can be enhanced in the wireless communication system.

The control unit may activate an SP-CSI corresponding to the sub-configuration or trigger an A-CSI, based on an identifier used for identifying the sub-configuration included in one report configuration. According to the above-described configuration, the terminal 20 can perform an operation related to activation and triggering of sub-configurations included in the CSI report configuration related to measurement and report, and can perform CSI reporting to the base station 10.

The control unit may activate SP-CSIs corresponding to sub-configurations or trigger an A-CSI, based on identifiers used for identifying the sub-configurations included in all of report configurations. According to the above-described configuration, the terminal 20 can perform an operation related to activation and triggering of sub-configurations included in the CSI report configuration related to measurement and report, and can perform CSI reporting to the base station 10.

The control unit may activate an SP-CSI corresponding to the sub-configuration or trigger an A-CSI, based on sub-configurations included in all of report configurations and identifiers for identifying the report configurations. According to the above-described configuration, the terminal 20 can perform an operation related to activation and triggering of sub-configurations included in the CSI report configuration related to measurement and report, and can perform CSI reporting to the base station 10.

The control unit may activate an SP-CSI corresponding to the sub-configuration or trigger an A-CSI, based on an identifier used for identifying the report configuration. According to the above-described configuration, the terminal 20 can perform an operation related to activation and triggering of sub-configurations included in the CSI report configuration related to measurement and report, and can perform CSI reporting to the base station 10.

In addition, according to an embodiment of the present invention, a communication method performed by a terminal is provided. The communication method includes: receiving, from a base station, a configuration related to a CSI (Channel state information) report; performing measurement of a CSI-RS (Reference signal) transmitted from the base station, based on a report configuration included in the configuration; transmitting a CSI report to the base station, based on a result of the measurement; and activating an SP (Semi-persistent) - CSI corresponding to a sub-configuration or triggering an A (Aperiodic) - CSI, based on an identifier used for identifying the sub-configuration included in the report configuration.

According to the above-described configuration, the terminal 20 can perform an operation related to activation and triggering of sub-configurations included in the CSI report configuration related to measurement and report, and can perform CSI reporting to the base station 10. In other words, procedures related to CSI (Channel state information) related to measurement and report can be enhanced in the wireless communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling), broadcast information (MIB (Master Information Block), SIB (System Information Block)), other signals, or a combination thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for UE.

At least one of configured BWPs may be active, and the UE is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 30: Core network
- 1001: Processor
- 1002: Memory
- 1003: Storage
- 1004: Communication apparatus
- 1005: Input apparatus
- 1006: Output apparatus
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A terminal comprising:
a reception unit configured to receive, from a base station, a configuration related to a CSI (Channel state information) report;
a control unit configured to perform measurement of a CSI-RS (Reference signal) transmitted from the base station, based on a report configuration included in the configuration; and
a transmission unit configured to transmit a CSI report to the base station, based on a result of the measurement, wherein
the control unit activates an SP (Semi-persistent) - CSI corresponding to a sub-configuration or triggers an A (Aperiodic) - CSI, based on an identifier used for identifying the sub-configuration included in the report configuration.

2. The terminal as claimed in claim 1, wherein
the control unit activates an SP-CSI corresponding to a sub-configuration or triggers an A-CSI, based on an identifier used for identifying the sub-configuration included in one report configuration.

3. The terminal as claimed in claim 1, wherein
the control unit activates SP-CSIs corresponding to sub-configurations or triggers an A-CSI, based on identifiers used for identifying the sub-configurations included in all of report configurations.

4. The terminal as claimed in claim 1, wherein
the control unit activates SP-CSIs corresponding to sub-configurations or triggers an A-CSI, based on identifiers used for identifying the sub-configurations included in all of report configurations.

5. The terminal as claimed in claim 1, wherein
the control unit activates an SP-CSI corresponding to a sub-configuration or triggers an A-CSI, based on an identifier used for identifying a report configuration.

6. A communication method performed by a terminal, the communication method comprising:
receiving, from a base station, a configuration related to a CSI (Channel state information) report;
performing measurement of a CSI-RS (Reference signal) transmitted from the base station, based on a report configuration included in the configuration;
transmitting a CSI report to the base station, based on a result of the measurement; and
activating an SP (Semi-persistent) - CSI corresponding to a sub-configuration or triggering an A (Aperiodic) - CSI, based on an identifier used for identifying the sub-configuration included in the report configuration.
